(19) Europäisches Patentamt
European Patent Office
Office européen des brevets

(11) **EP 4 255 615 B1**

(12) **EUROPEAN PATENT SPECIFICATION**

(45) Date of publication and mention of the grant of the patent:
**22.04.2026 Bulletin 2026/17**

(21) Application number: **21823901.0**

(22) Date of filing: **07.12.2021**

(51) International Patent Classification (IPC):
***B01D 61/14*** ***(2006.01)*** ***B01D 67/00*** ***(2006.01)***
***B01D 69/02*** ***(2006.01)*** ***B01D 71/66*** ***(2006.01)***
***C08J 9/26*** ***(2006.01)*** ***C08K 5/42*** ***(2006.01)***

(52) Cooperative Patent Classification (CPC):
**B01D 61/14; B01D 61/147; B01D 67/002; B01D 67/003; B01D 69/02; B01D 71/66; C08J 9/26; C08L 81/02;** B01D 2323/20; B01D 2323/216; B01D 2323/217; B01D 2325/02; B01D 2325/0283; C08J 2201/0424; C08J 2381/04;
(Cont.)

(86) International application number:
**PCT/EP2021/084665**

(87) International publication number:
**WO 2022/122769 (16.06.2022 Gazette 2022/24)**

(54) **POLYMER COMPOSITION AND METHOD FOR MANUFACTURING MEMBRANES THEREFROM**

POLYMERZUSAMMENSETZUNG UND VERFAHREN ZUR HERSTELLUNG VON MEMBRANEN DARAUS

COMPOSITION DE POLYMÈRE ET PROCÉDÉ DE FABRICATION DE MEMBRANES À PARTIR DE CELUI-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.12.2020 US 202063122005 P**
**14.01.2021 EP 21151656**

(43) Date of publication of application:
**11.10.2023 Bulletin 2023/41**

(73) Proprietor: **Syensqo Specialty Polymers USA, LLC**
**Alpharetta, GA 30005-3914 (US)**

(72) Inventors:
- **BRANHAM, Kelly D.**
  **Woodstock, Georgia 30188 (US)**
- **HOWARD, Sarah**
  **Roswell, Georgia 30076 (US)**
- **SINGLETARY, Nancy J.**
  **Alpharetta, Georgia 30004 (US)**
- **AURILIA, Dario**
  **20023 Cerro Maggiore (MI) (IT)**
- **DI NICOLO', Emanuele**
  **21055 Gorla Minore (VA) (IT)**

(74) Representative: **Benvenuti, Federica**
**SyensQo S.A.**
**Intellectual Assets Management**
**98, rue de la Fusée**
**1130 Bruxelles (BE)**

(56) References cited:
**EP-A1- 2 605 312**
**WO-A1-2018/065526**
**WO-A1-94/17974**
**JP-A- 2018 095 813**
**US-A1- 2015 159 032**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)
C08J 2400/104; C08J 2471/02

## Description

### Technical Field

The present invention relates to a composition for the manufacturing of a porous article, notably a membrane, which comprises a polyaryl sulphide polymer, a water-soluble polymeric additive and at least one water-soluble salt. The present invention also relates to a method for manufacturing said porous article, to porous articles therefrom and to the use thereof for purifying fluid(s).

### Background Art

Porous membranes are discrete, thin interfaces that moderate the permeation of chemical species in contact with them. The key property of porous membranes is their ability to control the permeation rate of chemical species through the membrane itself. This feature is exploited in many different applications like separation applications (water and gas) or drug delivery applications. Among porous (including microporous) membranes-driven separation processes, mention can be made of ultrafiltration, microfiltration, depth filtration, macrofiltration, membrane distillation, and membrane stripping.

Now, membranes made of poly(arylene sulphide) polymers (PAS), in particular poly(phenylene sulphide) polymers have been already described. Indeed, poly(arylene sulphide) polymers are high performance thermoplastics which possess high glass transition temperatures, high crystalline melting points, high thermal stability, and unrivalled solvent resistance, which make PAS the materials for choice in chemically and thermally harsh environments. Consistently, such properties make PAS polymers particularly useful for membranes employed in fluids separations, in particular in membrane separation processes which involve treatment of organic, acidic or basic fluids at high temperatures, such as for oil and gas production, refining of pharmaceuticals and fine chemicals, food and beverage production, and other industrial uses.

Nevertheless, the very same attributes, which make poly(arylene sulphide) polymers highly desirable materials in fields of use whereas high temperature and/or solvent resistance are required, also render such polymers very difficult to process into membranes.

Notably, solution-based methods for making membranes are restricted by the poor solubility of poly(arylene sulphide) polymers in common solvents, and requires use of special solvents/plasticizers, which may be able to dissolve PAS at high temperatures. Thermal induced phase separation techniques have been hence reported as possible routes to PAS porous membranes when leveraging on plasticizers such as diphenyl ketone (DPK), diphenyl sulfone (DPS), and dibutyl phthalate (DBP) (see e.g. X. Wang et al., RSC Adv., 2017, 7, pp. 10503), and using leaching additional solvents, for the removal of the said diluent (See e.g. US5246647**;** US5507984).

Other approaches to membranes of PAS have been described in WO94/17974**,** which pertains to a method of making a microporous membrane of polyphenylsulfide (PPS), including the steps of forming a blend of PPS, a crystallisable polymer incompatible with PPS, and optionally a plasticizer able to dissolve the PPS at the extrusion or casting temperature of PPS, processing said blend from the molten state to form a film, and leaching out at least a portion of the plasticizer and of the crystallisable polymer. In the thereby exemplified working embodiments, among crystallisable polymers, use is made notably of polycaprolactone, poly(vinyl alcohol) or polyethylene glycol, while leaching step is carried out using methylene chloride.

Still, WO94/17985 describes a similar approach, but wherein an amorphous polymer (e.g. polystyrene, polyetherimide or polysulfone) is used instead of a crystallisable polymer as leachable component in combination with polyphenylsulfide (PPS), for making a PPS microporous membrane.

Yet, all these methods involve handling massive amounts of organic plasticizers and organic solvents, often well above the flash point of the same, so raising critical safety concerns.

More recently, WO 2018/065526 (Solvay specialty Polymers USA, L.L.C.) has proposed an alternative method to make microporous membranes or hollow fibers, said method comprising providing a composition comprising

(I) a poly(ether ether ketone) (PEEK) polymer or a poly(phenylene sulfide) (PPS) polymer, and

(II) at least 28 wt.% based on the total weight of said composition of an additive, which is a sulfonate salt or a carboxylate salt;

processing the same into a film, and exposed said film to an aqueous medium for leaching out the additive, so as to provide the porous membrane. Examples of the composition as provided in the experimental section comprise notably a binary blend of PPS and sodium benzenesulfonate in a ratio 50/50, which is processed into a porous membrane, having porosity of about 50%.

While the technique, as referred above, was shown to effectively produce porous membranes using hot water as leaching medium up to a porosity of about 50 %, because the additive used is a small molecule, having low viscosity in the

molten phase, such technique is not suitable for producing membranes of higher porosity: increasing the amount of additive would inevitably lead to a phase separation of the components during compounding and film processing, so that no suitable pellets/film precursor possessing the required homogeneously dispersed distribution of additive within the PPS matrix could be obtained. Consequently, this technique has been found to be failing in these regards, and unable to deliver membranes having porosities of 60% or more.

## Summary of invention

The Applicant perceived that the need still exists for methods of making microporous articles of poly(arylene sulphide) polymers, including membranes, in the form of flat sheet, tubular and hollow fibers, notably suitable for use in oil and gas production, refining of pharmaceuticals and fine chemicals, food and beverage production, and other industrial uses, said methods being such not to make use of organic solvents, and to be economically and industrially effective for delivering poly(arylene sulphide) polymers membranes of high porosities.

The Applicant surprisingly found that the above mentioned problem can be solved by manufacturing a membrane starting from a composition comprising a ternary blend of at least one poly(arylene sulfide) (PAS) polymer, at least one polyelectrolyte, and at least one sulfonate or carboxylate salt with a metal selected from alkaline metal or alkaline-earth metals group.

Thus, in a first aspect, the present invention relates to a composition [composition (C)] comprising:

(a) at least one poly(arylene sulfide) (PAS) polymer,
(b) at least one polyelectrolyte [polyelectrolyte (E)], and
(c) at least one salt of an aromatic compound, said salt comprising an aromatic group and at least one sulfonate or carboxylate of a metal selected from the group consisting of alkaline metals, alkaline-earth metals, aluminum, iron, zinc, nickel, copper, palladium and silver [compound (S)].

## Description of embodiments

For the purposes of the present description:

- the use of parentheses before and after symbols or numbers identifying compounds, chemical formulae or parts of formulae has the mere purpose of better distinguishing those symbols or numbers from the rest of the text and hence said parentheses can also be omitted;
- "melting temperature ($T_m$)" or "$T_m$" or "melting point" is intended to indicate the melting temperature measured by differential scanning calorimetry (DSC) according to ASTM D3418 at 20°C/min as described in details in the examples;
- the term "halogen" includes fluorine, chlorine, bromine, and iodine, unless indicated otherwise;
- the adjective "aromatic" denotes any mono- or polynuclear cyclic group (or moiety) having a number of $\pi$ electrons equal to 4n+2, where n is 1 or any positive integer; an aromatic group (or moiety) can be an aryl and arylene group (or moiety).

<u>The poly(arylene sulphide) polymer [polymer (PAS)]</u>

The poly(arylene sulfide) ("PAS") polymer comprises recurring units ($R_{PAS1}$) represented by the following formula:

$$[-Ar_1-S-] \qquad (R_{PAS1})$$

wherein

$-Ar_1-$ is selected from the group of formulae consisting of:

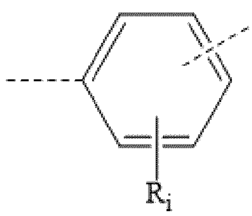

(a)

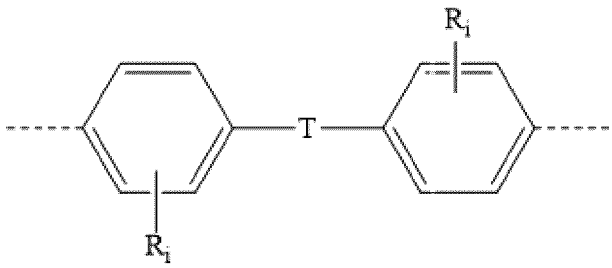

(b)

and

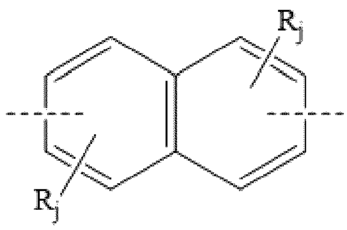

(c)

wherein:

R, at each instance, is independently selected from the group consisting of a $C_1$-$C_{12}$ alkyl group, a $C_7$-$C_{24}$ alkylaryl group, a $C_7$-$C_{24}$ aralkyl group, a $C_6$-$C_{24}$ arylene group, and a $C_6$-$C_{18}$ aryloxy group;
T is selected from the group consisting of a bond, -CO-, $-SO_2-$, -O-, - $C(CH_3)_2$-, $-C(CF_3)_2-$, phenyl and $-CH_2-$;
i, at each instance, is an independently selected integer from 0 to 4;
j, at each instance, is an independently selected integer from 0 to 3.

In formulae (a), (b) and (c), when i or j is zero, the corresponding benzyl rings are unsubstituted. Similar notation is used throughout the present description. Additionally, each formula (a) to (c) contains two dashed bonds, where one bond is to the explicit sulfur atom in the recurring unit ($R_{PAS1}$) and the other is a bond to an atom outside the recurring unit ($R_{PAS1}$) (*e.g.* an adjacent recurring unit). Analogous notation is used throughout.

Preferably, $-Ar_1-$ is represented by either formula (a) or (b), more preferably by formula (a).

More preferably, $-Ar_1-$ is represented by any of the following formulae:

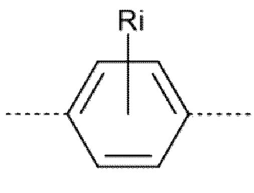

(a-1)

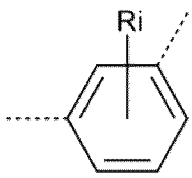

(a-2)

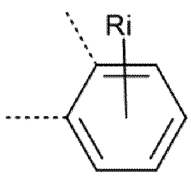

(a-3).

Still more preferably, $-Ar_1-$ is represented by any of formulae (a-1), (a-2) and (a-3), where i is zero.

When units ($R_{PAS1}$) having $-Ar_1-$ of formula (a-1) are present in combination with units whereas $-Ar_1-$ is of any of formulae (a-2) and/or (a-3), the total concentration of recurring units ($R_{PAS1}$) whereas $-Ar_1-$ is of any of formulae (a-2) and (a-3) in the polymer (PAS) is at most 10 mol%, at most 5 mol%, at most 3 mol%, at most 1 mol%, based on total amount of units ($R_{PAS1}$) whereas $-Ar_1-$ is of any of formulae (a-1), (a-2) and (a-3).

Polymer (PAS) having units ($R_{PAS1}$) of formula (a1) where i is zero, as described above, i.e. having units ($R_{PAS1}$) of formula:

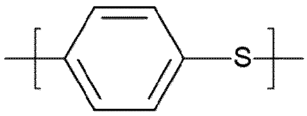

($R_{PPS}$)

is referred to as poly(phenylene sulfide) (PPS) polymer.

Polymer (PPS) may additionally comprise units of any of formulae:

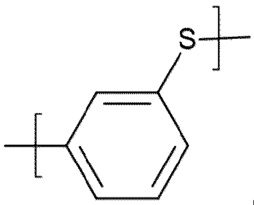

($R_{PPS\text{-}m}$)

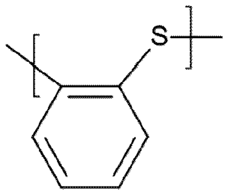

($R_{PPS\text{-}o}$),

being understood that when polymer (PPS) further comprises units ($R_{PPS\text{-}m}$) and/or ($R_{PPS\text{-}o}$), the total concentration of recurring units ($R_{PPS\text{-}m}$) and/or ($R_{PPS\text{-}o}$) in the polymer (PPS) is at most 10 mol%, at most 5 mol%, at most 3 mol%, at most 1 mol%, based on total amount of units ($R_{PPS}$), ($R_{PPS\text{-}m}$) and ($R_{PPS\text{-}o}$).

In some embodiments, the total concentration of recurring units ($R_{PAS1}$) in the polymer (PAS) is at least 50 mol%, at least 60 mol%, at least 70 mol%, at least 80 mol%, at least 90 mol%, at least 95 mol%, at least 98 mol%, at least 99 mol% or at least 99.9 mol%.

In some embodiments, polymer (PAS) may include recurring units ($R_{PAS2}$) different from recurring units ($R_{PAS1}$), said recurring units ($R_{PAS2}$) being represented by the following formula:

$[-Ar_2-S-]$ ($R_{PAS2}$)

Wherein:

$-Ar_2-$ is represented by the following formula:

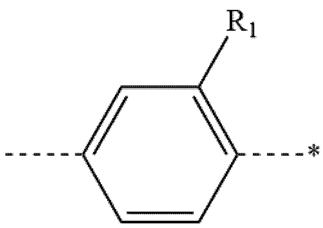

(d)

wherein $R_1$ is a $C_1$ to $C_{10}$ linear or branched alkyl group, preferably $R_1$ is $-CH_3$.

In formula (d), the dashed bond having a "*" indicates the bond to the explicit sulfur atom in recurring unit ($R_{PAS2}$) and the dashed bond without the "*" indicates a bond to an atom outside the recurring unit ($R_{PAS2}$). In other terms, in unit ($R_{PAS2}$), the $R_1$ substituent is in *ortho* position with respect to the -S- moiety.

Of course, in some embodiments, the polymer (PAS) can have additional recurring units, each distinct from each other and distinct from recurring units ($R_{PAS1}$) and ($R_{PAS2}$).

In some embodiments, the total concentration of recurring units ($R_{PAS1}$) and ($R_{PAS2}$) in the polymer (PAS) is at least 50 mol%, at least 60 mol%, at least 70 mol%, at least 80 mol%, at least 90 mol%, at least 95 mol%, at least 98 mol%, at least 99 mol% or at least 99.9 mol%.

As used herein, the molar concentration of recurring units in a polymer is relative to the total number of recurring units in that polymer, unless explicitly stated otherwise.

In some embodiments, the concentration of recurring unit ($R_{PAS1}$) in the polymer (PAS) is at least 50 mol%, at least 60 mol%, at least 70 mol%, at least 80 mol%, at least 85 mol%, at least 88 mol%, at least 90 mol%, at least 95 mol%, at least 97 mol%, at least 98 mol%, at least 98.5 mol%, or at least 99 mol%.

In some embodiments, the concentration of recurring unit ($R_{PAS2}$) in the polymer (PAS) may be of at least 0.5 mol%, at least 1 mol%, at least 1.5 mol%, at least 2 mol% or at least 2.5 mol%. In some embodiments, the concentration of recurring unit ($R_{PAS2}$) is no more than 15 mol%, no more than 12 mol%, no more than 10 mol%, or no more than 8 mol%.

In some embodiments, the number of moles of recurring unit ($R_{PAS2}$) in the polymer (PAS) may be from 0.5 mol% to 15 mol%, from 0.5 mol% to 12 mol%, from 0.5 mol% to 10 mol%, from 0.5 mol% to 8 mol%, from 1 mol% to 15 mol%, from 1 mol% to 12 mol%, from 1 mol% to 10 mol%, from 1 mol% to 8 mol%, from 2 mol% to 8 mol% or from 2.5 mol% to 8 mol%.

In some embodiments, the ratio of the number of recurring unit ($R_{PAS2}$) to the total number of recurring units ($R_{PAS1}$) and ($R_{PAS2}$) in the polymer (PAS) may be of at least 1 mol%, at least 1.5 mol%, at least 2 mol% or at least 2.5 mol%.

In some embodiments, the ratio of the number of recurring unit ($R_{PAS2}$) to the total number of recurring units ($R_{PAS1}$) and ($R_{PAS2}$) is no more than 15 mol%, no more than 12 mol%, no more than 10 mol%, or no more than 8 mol%.

While polymer (PAS) may comprise units ($R_{PAS2}$), preferred are embodiments whereas polymer (PAS) does not comprise any unit ($R_{PAS2}$), as detailed above. According to these embodiments, the concentration of recurring units ($R_{PAS1}$) in the polymer (PAS) is at least 50 mol%, at least 60 mol%, at least 70 mol%, at least 80 mol%, at least 90 mol%, at least 95 mol%, at least 98 mol%, at least 99 mol% or at least 99.9 mol%.

Most preferably, polymer (PAS) essentially consists of recurring units ($R_{PAS1}$), as detailed above. The expression "essentially consisting", when used for characterising constituent moieties of polymer (PAS) is meant to indicate that minor amounts of spurious units (e.g. less than 0.1 mol%), impurities or chain ends may be present, without this modifying the advantageous attributes of polymer (PAS).

Most preferably, polymer (PAS) is a polymer (PPS), as described above, and most preferably is a polymer (PPS) essentially consisting of units ($R_{PAS1}$) of formula ($R_{PPS}$), as detailed above.

The polymer (PAS) may have a melt flow rate (at 315.6°C under a weight of 1.27 kg according to ASTM D1238, procedure B) of at most 700 g/10 min, more preferably of at most 500 g/10 min, even more preferably of at most 200 g/10 min, still more preferably of at most 50 g/10 min, yet more preferably of at most 35 g/10 min.

Preferably, the polymer (PAS) has a melt flow rate (at 315.6 °C under a weight of 1.27 kg according to ASTM D1238, procedure B) of at least 1 g/10 min, more preferably of at least 5 g/10 min, even more preferably of at least 10 g/10 min, still more preferably of at least 15 g/10 min.

The polymer (PAS) can be amorphous or semi-crystalline. As used herein, an amorphous polymer has an enthalpy of fusion ("$\Delta H_f$") of no more than 5 Joules/g ("J/g"). The person of ordinary skill in the art will recognize that when the polymer (PAS) is amorphous, it lacks a detectable temperature of melting ($T_m$). Accordingly, where a polymer (PAS) has a $T_m$, the person of ordinary skill in the art will recognize that it refers to semi-crystalline polymer. Preferably, the polymer (PAS) is semi-crystalline. In some embodiments, the polymer (PAS) has a $\Delta H_f$ of at least 10 J/g, at least 20 J/g, at least, or at least 25 J/g. In some embodiments, the polymer (PAS) has a $\Delta H_f$ of no more than 90 J/g, no more than 70 J/g or no more than 60 J/g. In some embodiments, the polymer (PAS) has a $\Delta H_f$ of from 10 J/g to 90 J/g or from 20 J/g to 70 J/g. $\Delta H_f$ can be measured by differential scanning calorimeter (DSC), according to ASTM D3418.

Preferably, the polymer (PAS) has a melting point of at least 240°C, more preferably of at least 248°C, even more preferably of at least 250°C, when determined by differential scanning calorimeter (DSC) according to ASTM D3418.

Preferably, the polymer (PAS) has a melting point of at most 320°C, more preferably of at most 300°C, even more preferably of at most 295°C, when determined by differential scanning calorimeter (DSC) according to ASTM D3418.

The polyelectrolyte (E)

The polyelectrolyte (E) is a polymer having recurring units, said recurring units having one or more than one electrolyte group, i.e. a group which is ionisable in aqueous medium. While the recurring units of the polyelectrolyte (E) may bear electrolyte groups of both cationic and anionic types,

the polyelectrolyte (E) has
units possessing an acid group selected from

groups of formulae:

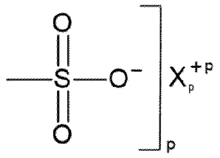

(E-s)

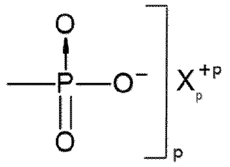

(E-p)

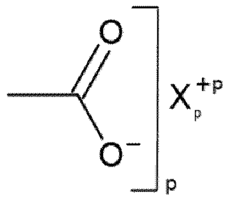

(E-c)

with $X_p$ being a p-valent cation, with p being 1, 2 or 3, preferably 1 or 2; $X_p$ being preferably H, an (alkyl)ammonium group, a metal cation group.

The polyelectrolyte (E) is advantageously selected so as to ensure thermal stability in the conditions encountered when processing polymer (PAS) in the molten phase. Consequently, polyelectrolyte (E) is advantageously selected from those which have a weight loss of less than 5 wt.%, preferably of less than 3 wt.%, in the temperature range from 100 and 300°C, when determined by TGA analysis according to ASTM E1131, under inert atmosphere. It is generally understood that weight losses below 100°C may be not meaningful in polyelectrolytes (E), because of possible retention of moisture. A weight loss of less than 5 wt.% between 100 and 300°C is hence representative of polyelectrolytes (E) which can withstand thermal conditions such as those encountered in melt processing polymers (PAS) without undergoing any significant decomposition phenomena.

Further, the polyelectrolyte (E) is generally selected among those which have an appreciable solubility in water, either at room temperature or at higher temperatures, but below normal boiling point. Generally, polyelectrolytes (E) are selected among those which have a solubility in water at 25°C of at least 1.0 g/l, preferably 5.0 g/l, more preferably 10.0 g/l.

The polyelectrolyte (E) is a polymeric material, i.e. a compound comprising a plurality of repeat units. The polyelectrolyte (E) is hence distinguishable from small molecules such as compound (S).

The polyelectrolyte is generally understood to possess an average molecular weight of exceeding 500, preferably exceeding 600, more preferably exceeding 800. Upper boundaries for the average molecular weight of the polyelectrolyte (E) is not particularly limited; polyelectrolytes (E) having average molecular weight up to 500 000 may be useful.

Methods for determining molecular weight of the polyelectrolyte (E) are known, and will be selected by one of ordinary skills in the art depending on the chemical nature of the polyelectrolyte (E) itself. It is generally understood that techniques such as Gel Permeation chromatography, NMR, viscosimetry of solutions, osmometry and the like may be used to determine molecular weight, if necessary against suitable standards.

Such polymeric character is such to confer to the said polyelectrolyte (E) appropriate viscosity in the molten state, so as to ensure suitable mixing and dispersability within the composition (C), as homogeneously dispersed phase in a continuous phase of polymer (PAS).

According to certain advantageous embodiments of the present invention, the polyelectrolyte (E) is selected from the group consisting of sulfonated aromatic-formaldehyde condensation products [polymers (Ar-S), hereunder].

Such polymers (Ar-S) are generally the result of the reaction between aromatic sulfonic acids such as, for example, naphthalene sulfonic acids, naphthol sulfonic acids, alkylated naphthalene and alkylated naphthol sulfonic acids as well as toluene sulfonic acids, benzene sulfonic acids, phenol sulfonic acids, and the like, with formaldehyde.

Aromatic sulfonic acids or aromatic sulfonates (which are precursors of said polymers (Ar-S)) can be prepared by sulfonating aromatic compounds such as, for example, alpha-naphthol, beta-naphthol, naphthalene, toluene, benzene,

phenol, methyl, ethyl, isopropyl and butyl naphthalenes and alkylated benzenes containing, for example 1 to 8 carbon atoms in the alkyl substituent groups.

Depending upon the particular starting material, the sulfonation reaction can introduce a single sulfonic acid group into the aromatic nucleus or two or more sulfonic acid groups. For instance, sulfonation of beta-naphthol with concentrated sulfuric acid results primarily initially in the production of 2-naphthol-1-sulfonic acid which rearranges to the 8-sulfonic acid and then rearranges to 2-naphthol-6-sulfonic acid. This is accompanied by the formation of 6,8- and 3,6-disulfonic acids. Accordingly, the sulfonation products are largely mixtures of various sulfonic acids containing principally monosulfonic acids. Similarly mixtures are obtained in the sulfonation of other aromatic compounds of the type described.

More particularly, polymers (Ar-S) may be prepared by reacting a sulfonated aromatic compound with formaldehyde to form a condensation product which is neutralized or rendered alkaline by the addition of an aqueous solution of a metal oxide or hydroxide, ammonium hydroxide, metal carbonate, or metal acetate.

Polymers (Ar-S) are generally understood to comprise units of formula ($R_{APS}$):

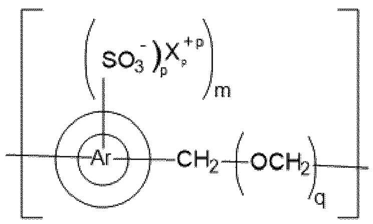

($R_{APS}$)

wherein:

- the symbol

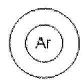

  denotes an aromatic group, which may be mononuclear or polynuclear, condensed or not, such as a phenyl group, a biphenyl group, a naphthalene group, and the like;
- $X_p$ is a p-valent cation, with p being 1, 2 or 3, preferably 1 or 2; $X_p$ being preferably H, an (alkyl)ammonium group, a metal cation group;
- q is zero or an integer of 1 or more; and
- in each recurring unit of formula ($R_{APS}$), m is zero or an integer of 1 to 4, with the provision that the average value of m, which is also referred to as degree of sulfonation (D.S., hereunder) is generally comprised from about 0.4 to about 1.4.

Polymers (Ar-S) are generally understood to possess average molecular weight of exceeding 500, preferably of exceeding 600, more preferably of exceeding 800; and/or of at most 10 000, preferably of at most 8 000, more preferably of at most 5 000.

Indeed, the degree of sulfonation (D.S.), defined herein as the average number of sulfonate or sulfonic acid groups per repeat unit of the polymeric structure, is an important variable which may have an effect on the solubility of the sulfonated aromatic-formaldehyde condensation products.

The polymers (Ar-S) used with the context of the present invention may have a D.S. equal to 1, when essentially manufactured by polycondensation of formaldehyde with a single mono-sulfonated aromatic compound, or may have a D.S. substantially different from 1, notably when prepared by alternate routes, and/or from mixtures of sulfonated aromatic compounds.

The polymers (Ar-S) found useful for incorporation into the composition (C) in accordance with the present invention are preferably formaldehyde condensation polymers of naphthalene sulfonic acids [polymers (N-S), hereinafter], and most preferably are formaldehyde condensation polymers of naphthalene mono-sulfonic acids, in particular of the 2-monosulfonic acid. Generally, these polymers (N-S) can be available as food-compatible and even pharmaceutically acceptable salts wherein the cation is selected from the group consisting of lithium, sodium, potassium, calcium, magnesium, zinc, aluminum, hydrogen, ammonium and substituted ammonium ions derived from pharmaceutically acceptable organic amines. In general, the metal and ammonium salts are preferred over the free sulfonic acid derivatives because of their higher water solubility and lower degree of acidity (closer to neutrality), with sodium and zinc salts being particularly preferred.

Generally, polymers (N-S) are polymers which comprise recurring units ($R_{NPS}$) of formula:

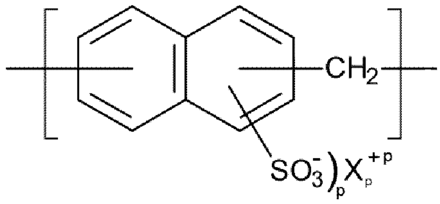

($R_{NPS}$-1)

wherein $X_p$ is a cation of valency p, with p being 1, 2 or 3

As indicated in general structural formula of its characteristics recurring units ($R_{NPS}$-1):

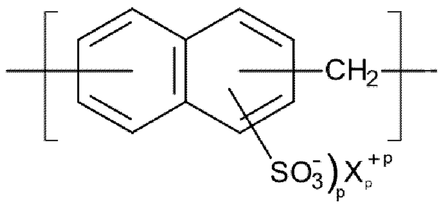

($R_{NPS}$-1)

wherein $X_p$ is a cation of valency p, with p being 1, 2 or 3;
the exact position or orientation of the methylene ($-CH_2-$) linkages on the aromatic rings is not known and is generally recognized as being complex and varied. It is further understood that some of the formaldehyde linkages may not be solely of the $-CH_2-$ type but can also involve some extended units, such as $-CH_2OCH_2-$ and $-CH_2(OCH_2)_nOCH_2-$, as shown in formulae below, which are representative of additional recurring units which may be present in the polymers (N-S), according to preferred embodiments:

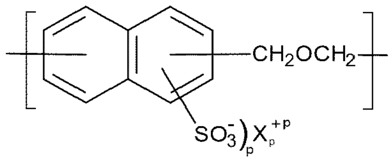

($R_{NPS}$-2)

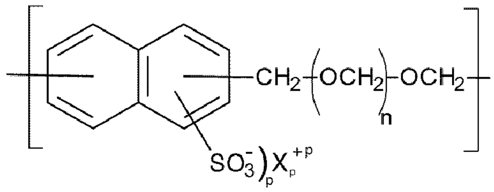

($R_{NPS}$-3)

with n being an integer, in particular n being 1 to 3, or even other possibilities, although the formaldehyde linkages of the $-CH_2-$ type comprised in units ($R_{NPS}$-1) are believed to be largely predominant.

In other terms, polymers (N-S) may comprise, in addition to recurring units ($R_{NPS}$-1) as detailed above, recurring units of formulae ($R_{NPS}$-2) and/or ($R_{NPS}$-3), being understood that, generally, the molar fraction of units ($R_{NPS}$-1) exceeds 50 % moles, preferably 70 % moles, more preferably 85 % moles of total units ($R_{NPS}$-1), ($R_{NPS}$-2) and ($R_{NPS}$-3).

Similarly, while in the polymers (N-S), the naphthalene ring is believed to be monosulfonated, and have the sulfonic groups primarily in the 2-position as shown in units of formula ($R_{NPS}$-1-a), there may be some of the 1-isomer as well, as in formula ($R_{NPS}$-1-b):

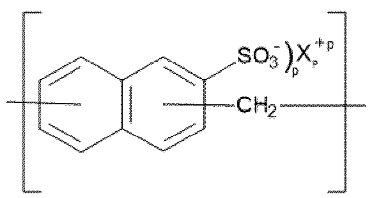

($R_{NPS}$-1-a)

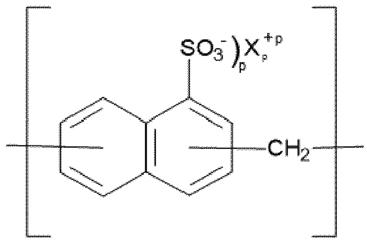

($R_{NPS}$-1-b)

with $X_p$ and p have the meaning as indicated above.

The polymers (Ar-S) are generally substantially soluble in water or mixed solvents comprising water and an organic solvent miscible therewith (generally at least 1% w/w).

As implied in recurring units ($R_{NPS}$-1), ($R_{NPS}$-2) and ($R_{NPS}$-3), the commercially available polymers (N-S) used in this invention are understood to be prepared by condensation of formaldehyde with (purified) naphthalene sulfonic acid and therefore have a degree of sulfonation of essentially 1. However, the present invention is not restricted to the use of these commercially available polymers, but includes analogous formaldehyde/naphthalene condensation products wherein the D.S. is in the range of from about 0.4 to about 1.4, as explained above.

Sulfonated aromatic-formaldehyde condensation products, aka polymers (Ar-S), are generally used in the composition (C) of the invention as salts, i.e. with a predominant part of their sulfonic acid groups salified with a cation other than $H^+$. Alkali metal cations, in particular lithium, sodium, potassium, or multivalent metal cations, such as calcium, magnesium, zinc, and aluminum, ammonium and primary, secondary, or tertiary organic ammonium cations may be suitable salifying cations in the polymers (Ar-S).

A polymer (Ar-S) which has been found particularly effective in the composition (C) of the present invention is naphthalenesulfonic acid formaldehyde polymer sodium salt.

<u>The compound (S)</u>

Preferably, said compound (S) complies with the following formula (I) :

$$(R)_a\text{-Ar-}(T)_b \qquad (I)$$

wherein

Ar is an aromatic moiety selected from the group consisting of substituted or unsubstituted, aromatic monocyclic or polycyclic group having 5 to 18 carbon atoms,
a is zero or an integer ranging from 1 to 5, preferably a is zero or 1;
when a is an integer from 1 to 5, each of R, identical or different from each other, is selected from the group consisting of a halogen atom, -OH, $-NH_2$, a $C_1$-$C_{18}$ aliphatic group, a $C_1$-$C_{18}$ cycloaliphatic group and a $C_1$-$C_{18}$ aromatic group;
b is an integer ranging from 1 to 4, preferably b is 1 or 2;
each of T, identical or different from each other, is $(SO_3^-)(M^{p+})_{1/p}$ or $(COO\text{-})\,(M^{p+})_{1/p}$ wherein $M^{p+}$ is a metal cation of p valence selected from the group consisting of alkaline metals, alkaline-earth metals, aluminium, iron, zinc, nickel, copper, palladium and silver.

As represented in above formula (I), compound (S) may comprise from 1 to 4 groups T, identical or different to each other, as defined above.

Preferably, each of R, identical or different from each other, is selected from the group consisting of halogen atom, -OH, $-NH_2$, and $C_1$-$C_3$ aliphatic group, such as methyl, ethyl or propyl.

Preferably, $M^{p+}$ is selected from alkali metals (column IA of the periodic table) or alkaline earths metal (column IIA of the periodic table).

In a preferred embodiment, $M^{p+}$ is sodium or potassium, such that T is a sodium and/or a potassium salt of sulfonic acid and/or carboxylic acid.

Preferably, said aromatic moiety in formula (I) is selected from the group consisting of :

(Ar-A) 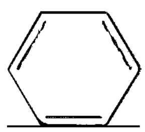

(Ar-B) 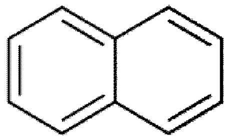

(Ar-C) 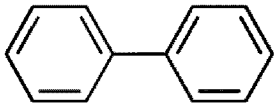

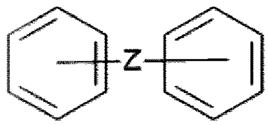
(Ar-D)

wherein

Z is a divalent moiety selected from the group consisting of $-SO_2-$, -CO- and (halo)alkylenes of 1 to 6 carbon atoms.

Preferably, Z is selected from $-C(CH_3)_2-$, $-C(CF_3)_2-$ or $-C_nH_{2n}-$ with n being an integer from 1 to 6, for example $-CH_2-$ or $-CH_2-CH_2-$.

Preferably, aromatic moieties of formula (Ar-A) to (Ar-D) comprise 1, 2 or 3 groups T, identical or different from each other, where X is as defined above. More preferably, aromatic moieties of formula (Ar-A) to (Ar-D) comprise 1 or 2 groups T as defined above.

More preferably, compound (S) complies with the following formula (II) :

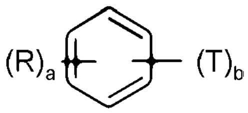
(II)

wherein :

a, R, b and T are as defined above.

Preferably, in above formulae (I) and (II), a is 0, 1 or 2.

According to one embodiment, a is zero so that the phenylene moieties have no other substituents than the sulfonate or carboxylate functions.

According to another embodiment, a is 1 and R is $-NH_2$.

Advantageously, compound (S) is by nature water-soluble.

As will be apparent to those skilled in the art, said compound (S) may also be said to be extractable, as defined below.

Preferably, compound (S) is selected in the group comprising, more preferably consisting of: benzoate, methylbenzoate, ethylbenzoate, propylbenzoate, benzene sulfonate, benzene disulfonate, p-toluene sulfonate, xylene sulfonate, cumene sulfonate, p-cymene sulfonate and dodecylbenzene sulfonate.

According to a preferred embodiment of the invention, compound (S) is selected from the group consisting of : sodium or potassium benzoate, sodium or potassium methyl benzoate, sodium or potassium ethylbenzoate, sodium or potassium butylbenzoate, sodium or potassium benzene sulfonate, sodium or potassium benzene-1,3-disulfonate, sodium or potassium p-toluene sulfonate, sodium or potassium xylenesulfonate, sodium or potassium cumene sulfonate, sodium or potassium *para*-cymene sulfonate, sodium or potassium n-butyl benzene sulfonate, sodium or potassium iso-butyl benzene sulfonate, sodium or potassium tert-butyl benezene sulfonate and sodium or potassium dodecylbenzenesulfonate.

According to another preferred embodiment, compound (S) further comprises at least one amino group. Under this embodiment, suitable example of compounds (S) is para-aminobenzoic acid salt with alkaline or alkaline-earth metal.

Very good results have been obtained when the compound (S) comprised in composition (C) was sodium benzene sulfonate, which was found to outperform the already extremely good performances achieved with other compounds (S), such as notably sodium benzoate.

As said above, compound (S) can be qualified as a "small molecule", advantageously possessing a well-defined chemical structure, and hence distinguishable from a polymer such as the polyelectrolyte (E); indeed, compound (S) may

be distinguished from said polyelectrolyte (E) notably because compound (S) has no repeat units. It is also further understood that compound (S) has a low molecular weight; generally, compound (S) has a molecular weight of below 500, preferably of below 400, more preferably of below 360. Molecular weight of compound (S) is generally known from its well-defined chemical structure.

According to certain embodiments, said composition (C) comprises said at least one polymer (PAS) in an amount from 25 wt.% to 65 wt.%, preferably of from 30 wt.% to 55 wt.%, more preferably of from 35 wt.% to 50 wt.% based on the total weight of said composition (C).

According to certain embodiments, said composition (C) comprises said at least one polyelectrolyte (E) in an amount from 5 wt.% to 50 wt.%, preferably of from 10 wt.% to 45 wt.%, more preferably of from 15 wt.% to 40 wt.%, based on the total weight of said composition (C).

According to certain embodiments, said composition (C) comprises said at least one compound (S) in an amount from 5 wt.% to 50 wt.%, preferably of from 10 wt.% to 45 wt.%, more preferably of from 15 wt.% to 40 wt.%, based on the total weight of said composition (C).

In a still preferred embodiment, said composition (C) comprises:

- said polymer (PAS) in an amount from 25 wt.% to 65 wt.%, preferably of from 30 wt.% to 55 wt.%, more preferably of from 35 wt.% to 50 wt.%;
- said polyelectrolyte (E) in an amount from 5 wt.% to 50 wt.%, preferably of from 10 wt.% to 45 wt.%, more preferably of from 15 wt.% to 40 wt.%; and
- said compound (S) in an amount from 5 wt.% to 50 wt.%, preferably of from 10 wt.% to 45 wt.%, more preferably of from 15 wt.% to 40 wt.%, the amounts being based on the total weight of said composition (C).

In certain preferred embodiments, said composition (C) comprises:

- polymer (PPS), as described above, in an amount from 25 wt.% to 65 wt.%, preferably of from 30 wt.% to 55 wt.%, more preferably of from 35 wt.% to 50 wt.%;
- polymer (Ar-S), as described above, and preferably polymer (N-S), as detailed above, in an amount from 5 wt.% to 50 wt.%, preferably of from 10 wt.% to 45 wt.%, more preferably of from 15 wt.% to 40 wt.%; and
- compound (S) of formula (I) : $(R)_a\text{-Ar-}(T)_b$, as detailed above, in an amount from 5 wt.% to 50 wt.%, preferably of from 10 wt.% to 45 wt.%, more preferably of from 15 wt.% to 40 wt.%,

the amounts being based on the total weight of said composition (C).

Optional ingredients can be added to composition (C) according to the present invention. Said optional ingredients can be selected from the person skilled in the art, based on the final use for which the membrane is intended.

When present, said optional ingredients are in a total amount of less than 20 wt.%, preferably less than 18 wt.% and even more preferably less than 15 wt.% based on the total weight of said composition (C).

Suitable optional ingredients are selected from: inorganic fillers, such as (nano)silica, $TiO_2$, ZnO, ZrO, sulfates, NaCl, carbonates; plasticizers, which may be notably selected from the group consisting of : diphenic acid, N,N-diphenylformamide, benzil, anthracene, 1-phenylnaphthalene, 4-bromobiphenyl, 4-bromodiphenylether, benzophenone, 1-benzyl-2-pyrrolidinone, o,o'-biphenol, phenanthrene, triphenyl-methanol, triphenylmethane, triphenylene, 1,2,3-triphenylbenzene, di-phenylsulfone, 2,5-diphenyloxazole, 2-biphenylcarboxylic acid, 4-biphenyl carboxylic acid, m-terphenyl, 4-benzoylbiphenyl, 2-benzoylnaphthalene, 3-phenoxybenzyl alcohol, fluoranthene, 3,4-oxadiazole, 9-fluorenone, 1,2,dibenzoylbenzene, dibenzoylmethane, p-terphenyl, 4-phenylphenol, 4,4'-bromobiphenyl, diphenylphthalate, 2,6-diphenylphenol, phenothiazine, 4,4'-dimethoxybenzophenone, 9,10-diphenylanthracene, pentachlorophenol, pyrene, 9,9'-bifluorene, mixture of terphenyls, mixture of partially hydrogenated terphenyls, mixture of terphenyls and quarter-phenyls, 1-phenyl-2-pyrrolidinone, 4,4'-isopropylidenediphenol, 4,4'-di hydroxybenzophenone, quaterphenyl, diphenyl terephthalate, 4,4'-dimethyl diphenylsulfone, 3,3',4,4'-tetramethyldiphenylsulfone, epsilon-caprolactam, and mixtures thereof.

In a preferred embodiment, the composition (C) of the present invention comprises only said polymer (PAS), said polyelectrolyte (E) and said compound (S).

Composition (C) as defined above can be prepared by methods well known to the person of ordinary skill in the art.

The invention pertains, in a further embodiment, to a method ($M^C$) of making a composition (C), said method comprises blending at least one polymer (PAS), at least one polyelectrolyte (E) and at least one compound (S), as above detailed, as defined above.

For example, such method ($M^C$) may include, but is not limited to, melt-mixing processes. Melt-mixing processes are typically carried out by heating a thermoplastic polymer above its melting temperature thereby forming a melt of the thermoplastic polymer Such a process may be carried out by heating the polymer (PAS), polyelectrolyte (E) and compound (S) above the melting temperature ($T_m$) and/or above the glass transition temperature ($T_g$) of the polymer (PAS) to form a

melt of the composition (C).

The result of method ($M^C$) is composition (C); all the features described above in connection with composition (C) are corresponding features of the method ($M^C$).

Blending in the method ($M^C$) can be carried out in a melt-mixing apparatus. Any melt-mixing apparatus known to the one skilled in the art of preparing polymer compositions by melt mixing can be used. Suitable melt-mixing apparatus are, for example, kneaders, Banbury mixers, single-screw extruders, and twin-screw extruders. Preferably, use is made of an extruder fitted with means for dosing all the desired components to the extruder, either to the extruder's throat or to the melt. In the method ($M^C$), the constituting components for forming the composition (C) are fed to the melt-mixing apparatus and melt-mixed in that apparatus. The constituting components may be fed simultaneously as a powder mixture or granule mixer, also known as dry-blend, or may be fed separately. In this latter case, the sequence of addition is not particularly limited, being understood that polymer (PAS) is generally fed as first component, while the other ingredients are either fed simultaneously or subsequently.

A particularly well adapted melt-mixing apparatus is a twin-screw extruder, such as those from producer Coperion GmbH.

When the method ($M^C$) comprises blending by melt mixing, it may also comprise a step consisting in a cooling of the molten mixture for forming composition (C) as a solid.

As a result of method ($M^C$), composition (C) may be advantageously provided either in the form of pellets or in the form of powder.

As an alternative, method ($M^C$) may deliver composition (C) under the form of a shaped three-dimensional part, other than a powder or a pellet; still, composition (C) may be provided in its molten form directly for further processing.

In some embodiments, the blending temperature in the method ($M^C$) ranges from about 180-450°C, preferably from about 220-440°C, from about 260-430°C or from about 280-420°C.

Preferably, the blending temperature in the method ($M^C$) is at least 15°C, preferably at least 20°C, at least 40°C, at least 50°C greater than the melting temperature and/or glass transition temperature of the polymer (PAS).

Method of making a porous article

In a further aspect, the present invention relates to a method [method ($M^Q$)] for the manufacture of a microporous article [article ($P_P$) ], said method comprising

(I) melt processing a composition (C) comprising at least one polymer (PAS), at least one polyelectrolyte (E) and at least one compound (S), as above detailed, thus providing a precursor article [article ($A_P$)];

(II) contacting said article ($A_P$) as obtained in step (I) with at least one leaching medium, so as to at least partially remove polyelectrolyte (E) and compound (S), thus providing said article ($P_P$).

The microporous article (not part of the invention)

The term "microporous article" or article ($P_P$) means that the article is porous, i.e. it possesses well-defined porosity, that is to say it is an article comprising pores and that pores have small sizes dimension.

Microporous articles or articles ($P_P$) can be generally characterized by their mean flow pore diameter and the porosity, i.e. the fraction of the total article that is porous.

Indeed, the expression "microporous" is intended to imply that mean flow pore diameter (MFD) of the pores of the microporous article, when determined according to ASTM F316-03, is of below 5 $\mu$m, preferably of below 3 $\mu$m, more preferably of below 2 $\mu$m.

Articles ($P_P$) may be foams or foamed materials, which may be shaped in whichever possible three dimensional shape, and which offer lightweigh advantages, while delivering outstanding mechanical properties, representative of those of the constituent polymer (PAS).

Articles ($P_P$) may be membranes, suitable for effecting separations of fluids.

Still, articles ($P_P$) may be used as separators for uses in secondary batteries, possibly further coated/modified with additional ingredients.

It is generally understood that the said microporous article may comprise residues derived from the template leaching method used for its manufacture. Hence, it may be that the microporous article may comprise in addition to major amounts of polymer (PAS), minor amounts of polyelectrolyte (E) and/or of compound (S), as detailed above.

Generally, the said microporous article comprises a combined amount of polyelectrolyte (E) and compound (S) of at most 15 wt.%, preferably at most of 12 wt.%, more preferably at most 10 wt.%, with respect to the total weight of the microporous article.

The microporous article is
essentially consisting of a major amount of polymer (PAS) and a minor amount of polyelectrolyte (E) and compound (S), being understood that minor quantities, generally of at most 1 wt.% (with respect to the total weight of the microporous

article) of other ingredients, impurities or spurious ingredients may be tolerated, provided that they do not substantially modify the advantageous attributes of the microporous article.

The microporous article advantageously possesses a gravimetric porosity ($\varepsilon_m$) of 20 to 95 % v/v, preferably of 40 to 90 % v/v; more preferably, the microporous article can be hereby provided with gravimetric porosity of exceeding 50 % v/v, preferably exceeding 53 % v/v, even more preferably exceeding 55 % v/v. Microporous articles which offer peculiar advantages are those whereas the gravimetric porosity is of 55 to 85 % v/v, preferably of 58 to 80 % v/v.

As explained, the term "gravimetric porosity" is intended to denote the volume fraction of voids over the total volume of the porous membrane.

Suitable techniques for the determination of the gravimetric porosity in the porous articles are described for instance in SMOLDERS K., et al. Terminology for membrane distillation. Desalination. 1989, vol.72, p.249-262.

As said, said microporous article has a mean flow pore diameter (MFD), as determined according to ASTM F316-03, of at least 0.005 to at most 0.500 μm, preferably of at least 0.008 μm, more preferably at least 0.010 μm, even more preferably at least 0.020 μm; and/or or preferably of at most 0.250 μm, more preferably of at most 0.150 μm, even more preferably of at most 0.100 μm.

Advantageously, the microporous article is endowed with a narrow distribution of pores sizes, which is particularly advantageous for its filtration/separation performances. It is generally known that bubble point diameter (BPD) is representative of the largest pore opening within the membrane. Hence, the ratio BDP/MFD is of significance for describing the distribution of pores sizes in the microporous article. Accordingly, in particular, the microporous article possesses a distribution of pores sizes such that the ratio between the bubble point diameter (BPD) and the mean flow pore diameter (MFD) (ratio BDP/MFD) is of less than 20, preferably less than 15, more preferably less than 12, with BDP and MFD being determined according ASTM F316-03.

The microporous article of the disclosure is generally a porous membrane [membrane (Q)], that is to say a discrete, generally thin, interface that moderates the permeation of chemical species in contact with it. This interface may be molecularly homogeneous, that is, completely uniform in structure (dense membrane), or it may be chemically or physically heterogeneous, for example containing voids, holes or pores of finite dimensions (porous membrane).

Membranes (Q) having a uniform structure throughout their thickness, containing pores homogeneously distributed throughout their thickness are generally known as symmetric (or isotropic) membranes; membranes having pores which are not homogeneously distributed throughout their thickness are generally known as asymmetric membranes. Asymmetric membranes may include a thin selective layer (0.1-1 μm thick) and a highly porous thick layer (100-200 μm thick) which acts as a support and has little effect on the separation characteristics of the membrane.

The membrane (Q) hereby provided may be either a symmetric membrane or an asymmetric membrane.

The membrane (Q) provided hereby typically possesses a gravimetric porosity ($\varepsilon$) comprised between 20 to 95 % v/v, preferably between 40 to 90 % v/v. More preferably, the porous membrane can be hereby provided with gravimetric porosity of exceeding 50 % v/v, preferably exceeding 53 % v/v, even more preferably exceeding 55 % v/v. Porous membranes which offer peculiar advantages are those whereas the gravimetric porosity is of 55 to 85 % v/v, preferably of 58 to 80 % v/v.

The membrane (Q) may be either a self-standing porous membrane or can be assembled in a multi-layer assembly.

When assembled into a multi-layer assembly, the membrane (Q) hereby provided may be notably supported onto a substrate layer, which may be partially or fully interpenetrated by the porous membrane of the invention, or may not be interpenetrated.

The nature of the substrate is not particularly limited. The substrate generally consists of material(s) having a minimal influence on the selectivity of the porous membrane. The substrate layer preferably consists of non-woven materials, glass fibres and/or polymeric materials such as for example polypropylene, polyethylene and polyethyleneterephthalate.

Membranes (Q) can be in the form of a flat sheet or in the form of tubes. Tubular membranes are classified based on their dimensions in:

- tubular membranes having a diameter greater than 3 mm;
- capillary membranes, having a diameter comprised between 0.5 mm and 3 mm; and
- hollow fibres having a diameter of less than 0.5 mm. Oftentimes capillary membranes are also referred to as hollow fibres.

Flat sheet membranes (Q) are generally preferred when high fluxes are required whereas hollow fibres are particularly advantageous in applications where compact modules with high surface areas are required.

Thickness of the membrane (Q) hereby provided can be tuned depending on the target field of use. Generally, porous membranes possess a thickness of at least 10 μm, preferably of at least 15 μm, more preferably at least 20 μm, and/or of at most 500 μm, preferably at most 450 μm, even more preferably at most 400 μm.

The microporous article of the disclosure generally possesses a water flux permeability, at a pressure of 1 bar and at a temperature of 23°C, of at least 5, preferably at least 10, more preferably at least 15 l /(h x $m^2$).

In step (I), composition (C) is melt processed; all the features described above in connection with composition (C) are corresponding features of the method ($M^Q$).

Generally, composition (C) may be shaped in a variety of three-dimensional shapes in Step (I), depending upon the target field of use of the article ($P_P$). Depending upon the target shape, various melt processing technologies may be used, including techniques involving extrusion molding, injection molding, cast molding, melt spinning, and the like.

It is nonetheless understood that in the method ($M^Q$), article ($A_P$) is preferably processed from the composition (C) using melt extrusion process.

Appropriate choice of the extrusion die, and/or additional steps of cooling, and/or stretching either in the machine or in the transverse direction (or in any combination thereof), may be leveraged to obtain an article ($A_P$) of targeted dimensions.

It is further understood that in the method ($M^Q$), article ($A_P$) may be obtained as an assembly with a suitable substrate layer, as described above, either by melt processing composition (C) onto a substrate layer so as to obtain the article ($A_P$) as an assembly with the said substrate layer, or by assembling said article ($A_P$) with said substrate layer.

In Step (I), after melt processing of composition (C), article ($A_P$) is generally appropriately cooled below the melting temperature and/or glass transition temperature of the polymer (PAS).

In step (II), said article ($A_P$) is contacted with at least one leaching medium, so as to at least partially remove polyelectrolyte (E) and compound (S).

Said step (II) is preferably performed by placing said article ($A_P$) in a bath (also referred to as "leaching bath" or "bath for extraction") comprising at least one leaching medium.

Suitable leaching media may be selected from aqueous media or organic solvent media, i.e. in liquid media whereas the liquid phase is composed predominantly of water, or in liquid media whereas the liquid phase is composed predominantly of at least one organic solvent.

The choice of the leaching media is carried out by one of ordinary skills in the art, considering that leaching media is generally required to possess sufficient solubilization ability towards both compound (S) and polyelectrolyte (E), while not substantially solubilizing (at least in the conditions of Step (II)) polymer (PAS).

Organic solvent media may include polar protic solvents or polar aprotic solvents.

Among polar protic solvents, mention can be made in particularly of alcohols, including glycols or polyols, preferably aliphatic alcohols.

Among polar aprotic solvents mention can be made of dimethylacetamide (DMAC), N-Methyl-2-Pyrrolidone (NMP), dimethyl sulfoxide (DMSO), dimethylformamide (DMF), methyl-5-(dimethylamino)-2-methyl-5-oxopentanoate that is commercially available from Solvay under the trademane Rhodiasolv® PolarClean, tetrahydrofuran (THF), dichloromethane, and sulfolane.

It is nonetheless preferred for the leaching medium to be an aqueous medium. It is indeed an advantageous aspect of the method ($M^Q$) the fact that the use of organic solvents is not required; in particular, the method ($M^Q$) may be used for making microporous articles, such as membranes, using aqueous media possessing a totally positive environmental profile, with no environmental nor toxicological concerns, and contributing to the overall economics of the method ($M^Q$).

The aqueous medium may comprise minor amounts of one water-miscible solvent; in particular, the aqueous medium may comprise minor amounts of at least one aliphatic alcohol, preferably, of at least one aliphatic alcohol having a short chain, for example from 1 to 6 carbon atoms, more preferably methanol, ethanol and isopropanol.

Further, the pH of the aqueous medium can be advantageously adjusted for increasing solubilisation of leachable components and/or further additives, such as plasticizers. It may hence be appropriate for the aqueous medium to be a basic aqueous medium, having a pH of exceeding 7, preferably of exceeding 8.

The leaching medium is usually held at a temperature of at least 0°C, preferably of at least 15°C, more preferably of at least 20°C. The leaching medium is usually held at a temperature of less than 100°C, preferably of less than 98°C, more preferably of less than 95°C.

Preferably, the residence time in said leaching medium is such that at least a portion of said compound (S) and of said polyelectrolyte (E) is removed. The time period needed to dissolve at least a portion of the compound (S) and of said polyelectrolyte (E) is variable. Preferably, the time period can vary between 30 minutes to 10 hours.

The choice of the temperature of the leaching medium may have an impact on the dissolution rate of the compound (S) and/or of the polyelectrolyte (E); temperatures of between 80 and 90°C have been found particularly advantageous, in particular when the leaching medium is an aqueous medium.

Optionally, one or more optional steps can be performed after step (II).

For example, said article ($P_P$) as obtained after step (II) can be dried and/or stretched.

Generally, the method ($M^Q$) comprises at least a further step of drying the article ($P_P$).

According to one embodiment, before drying, leaching medium remaining in the article ($P_P$) may be exchanged

with a more volatile, drying agent [solvent (D)], which possesses a lower surface tension and/or increased volatility compared to leaching medium.

The exchange from leaching medium to solvent (D) may be carried out at temperatures which do not adversely affect the article ($P_P$), preferably between about 0°C and about 100°C.

For embodiments whereas the leaching medium is an aqueous medium, isopropanol may be used as a solvent (D).

Drying can be performed by working under vacuum or under flow of inert gas.

Article ($P_P$) is preferably dried by properly selecting the temperature, such that the article ($P_P$) is not negatively affected.

Advantageously, drying is performed at a temperature between 0°C and 200°C, more preferably between 40°C and 100°C.

At the end of step (II), an article ($P_P$) is obtained.

In case article ($A_P$) is provided in Step (II) as an assembly with at least one substrate layer, or when article ($P_P$) is further assembled with any such substrate layer(s), as described above, an article ($P_P$) may be obtained comprising a substrate layer.

According to another embodiment, a step of annealing said article ($A_P$), or in other words exposing said article ($A_P$) to high temperature, can be optionally performed after said step (I) and before said step (II).

Preferably, said annealing step may be performed at a temperature above the glass transition temperature ($T_g$) of said polymer (PAS) and about at least 10°C below the melting point of the polymer (PAS).

Preferably, said annealing step is performed for a time between about 30 seconds and about 24 hours.

Uses of the microporous article (not part of the invention)

When the article ($P_P$) is a membrane (Q), said membrane (Q) according to may be used for filtrating biologic solution (e.g. bioburden, virus, other large molecules) and/or buffer solutions (e.g. solutions that may contain small amount of solvents like DMSO or other polar aprotic solvents).

Preferably, membrane (Q) according to the present disclosure is used to filter oil/water emulsions, such as notably fracking water and the so-called "produced water", or in another words water coming from oil wells, water with high solid content, waste water.

Thus, in a further aspect, the present disclosure relates to the use of membrane (Q) as defined above, for filtering at least one fluid, said fluid being preferably selected from the group comprising, preferably consisting of: biologic solution, buffer solutions, oil/water emulsions, produced water.

According to another aspect, the present disclosure relates to a method for filtering at least one fluid, said method comprising contacting said fluid with at least one membrane (Q) as defined above.

Advantageously, said fluid is a liquid phase selected in the groups comprising, more preferably consisting of: biologic solutions (e.g. bioburden, virus, other large molecules); and/or buffer solutions (e.g. solutions that may contain small amount of solvents like DMSO or other polar aprotic solvents); and/or oil/water emulsions, such as notably fracking water and the so-called "produced water", or in another words water coming from oil wells, water with high solid content, waste water.

Further to the above, membrane (Q) according to present disclosure can also be employed in reverse osmosis, ultrafiltration and gas separation process as support layer well as in gas transfer application from and into liquids.

Examples of gas separation applications include generation of nitrogen from air, hydrogen recovery in refinery and petrochemical plants, dehydration of gases and removal of acid gases from the natural gas.

The invention will be herein after illustrated in greater detail in the following section by means of examples.

## Examples

### Materials

**Table 1**

| Raw Materials | CAS# | Molecular Weight (g/mol) | $T_m$1 (°C) | $T_m$2 (°C) |
|---|---|---|---|---|
| Ryton® PPS QC160N, Solvay | 26125-40-6 | > 10 000 | 280 | - |
| Sodium naphthalenesulfonate polymer (NaNSP) - Parchem | 9084-06-4 | 1200 | 250 | - |
| Sodium benzenesulfonate (NaBzS) - Biddle Sawyer | 515-42-4 | 180.2 | 320 | 418 |

(continued)

| Raw Materials | CAS# | Molecular Weight (g/mol) | $T_m1$ (°C) | $T_m2$ (°C) |
|---|---|---|---|---|
| Sodium benzoate (NaBz) - Fluid Energy | 532-32-1 | 144.1 | 442 | 463 |

**Example 1**

Compounds of the following were made by combining the ingredients in the table above and processing in a commercial twin screw extruder: 30-40 weight percent (wt%) Ryton® QC160N PPS, 30-35% Sodium naphthalenesulfonate polymer, abbreviated NaNSP (Parchem, New Rochelle, NY), and 30-35% Sodium benezenesilfonate, abbreviated NaBzS (Biddle Sawyer, New York, NY), or Sodium benzoate, abbreviated NaBz, (Fluid Energy, Telford, PA, under the product name: Micronized Sodium Benzoate). A Coperion ZSK-26 twin screw extruder (Coperion GmbH, Stuttgart, Germany) was used in all cases to compound these blends. This extruder had 12 barrel zones and a heated exit die operating at up to 450 °C and was capable of mass throughputs > 30 kg/hour.

A K-Tron gravimetric feeder (Coperion GmbH, Stuttgart, Germany) was used to feed each material into the feeding section(s) of the extruder to yield the proper mass ratio of the components using a combined mass feed rate 17-18 pounds/hour. These ratios appear in the table below. The components were melted and mixed with screws designed to achieve a homogeneous melt composition. The actual melt temperature at the exit die was measured with a hand-held device for each blend and found to be 340-345 °C for each compound. Each melt stream was air cooled and strands with 3-4 mm diameter were collected.

As preliminary test for determining extractability of NaNSP, NaBzS, NaBz from PPS, short section of each strand were place in hot water (90-95 °C), and the soluble components (NaNSP, NaBz, NaBzS) were effectively removed by extraction. Results are summarized in Table below.

**Table 2**

| Ex. | Polymer (PAS) | % Polymer (PAS) | % NaNSP | %NaBzS | %NaBz | After extraction |
|---|---|---|---|---|---|---|
| Ex. 1 | QC160N | 40 | 30 | - | 30 | Porous solid |
| Ex. 2 | QC160N | 40 | 30 | 30 | - | Porous solid |
| Ex. 3 | QC160N | 30 | 35 | 35 | - | Powder |

**Example 2**

Compound were made as described in Example 1 with the ratio of components shown in the table below. Mass feed rate rates were maintained at approximately 20-25 pounds/hour and the melt temperature was 355-360 °C. In this case, the melt stream was air cooled and fed into a Maag Primo 60E pelletizer (Maag Automatik GmbH, Stuttgart, Germany). The pellets were collected and kept in sealed plastic buckets until used film extrusion runs.

**Table 3**

| Ex. | Polymer (PAS) | % Polymer (PAS) | % NaNSP | %NaBzS | %NaBz | Target Film Thickness (mm) |
|---|---|---|---|---|---|---|
| Ex. 3 | QC160N | 40 | 30 | - | 30 | 0.2-0.3 |
| Ex. 4 | QC160N | 40 | 30 | 30 | - | 0.2-0.3 |
| Ex. 5 | QC160N | 35 | 32.5 | 32.5 | - | 0.2-0.3 |

Films from the compounds above were melt extruded by feeding the pellets into an OCS (Rheology Solutions, Victoria AU) single screw extruder equipped with a 6 inch flat film die. The extruder has five zones and each zone was set to the following temperatures: 250, 280, 300, 320, 320 (°C). The die temperature was maintained at 320 °C. The screw speed on the extruder was varied from 15-20 rpm and the films were cast onto a cooling roll maintained at 100 °C. Precursor film samples were collected and the soluble components (NaNSP, NaBzS, NaBz) were removed by extraction with hot water (80-90 °C). These data are shown in the table below. Membrane thickness ranged from approximately 0.2 to 0.4 mm.

Table 4

| Film | Weight before (g) | Weight after (g) | % Extracted | Thickness (mm) |
|---|---|---|---|---|
| **Ex. 3 - A** | 37.74 | 15.94 | **57.8%** | 0.31-0.43 |
| **Ex. 3 - B** | 49.93 | 21.04 | **57.9%** | |
| **Ex. 4 - A** | 13.76 | 6.02 | **56.3%** | 0.22-0.32 |
| **Ex. 4 - B** | 46.18 | 20.08 | **56.5%** | |
| **Ex. 5 - A** | 24.05 | 9.09 | **62.2%** | 0.16-0.25 |
| **Ex. 5 - B** | 16.63 | 6.26 | **62.4%** | |
| **Ex. 5 - C** | 15.14 | 5.72 | **62.2%** | |

Data comprised in Table 4 above clearly demonstrate that extraction of soluble components (NaNSP, NaBzS, NaBz) by treatment with hot water, as described above, is almost quantitative in all working embodiments.

These membranes were characterized in the manner described below.

**Methods**

**Water flux permeability**

Water flux (PWP) through each membrane at given pressure, was defined as the volume which permeates per unit area and per unit time. The flux (PWP) expressed in L/(h x $m^2$), was calculated by the following equation:

$$\text{PWP} = \frac{V}{A\,\Delta t}$$

wherein

V (L) is the volume of permeate,
A ($m^2$) is the membrane area, and
$\Delta$t (h) is the operation time.
Water flux measurements (PWP) were conducted at room temperature (23 °C) using dead-end configuration under a constant nitrogen pressure of 1 bar. Membrane discs with an effective area of 11.3 $cm^2$ were cut from the items stored in water and placed on a metal plate.

**Gravimetric porosity**

Gravimetric porosity of the membrane was defined as the volume of the pores divided by the total volume of the membrane.

Membrane porosity ($\varepsilon$) was determined according to the gravimetric method detailed below.

Perfectly dry membrane pieces were weighed and impregnated in isopropylic alcohol (IPA) for 24h. After this time, the excess of the liquid was removed with tissue paper, and membranes weight was measured again. The porosities were measured using IPA (isopropyl alcohol) as wetting fluid according to the procedure described in Appendix of Desalination, 72 (1989) 249-262.

$$\varepsilon = \frac{\frac{(Wet - Dry)}{\rho_{liquid}}}{\frac{(Wet - Dry)}{\rho_{liquid}} - \frac{Dry}{\rho_{polymer}}}$$

where

'Wet' was the weight of the wetted membrane,
'Dry' was the weight of dry membrane,
$\rho_{polymer}$ was the density of Ryton® QC160N PPS (1.34 g/$cm^3$) and
$\rho_{liquid}$ was the density of IPA (0.78 g/$cm^3$).

### Bubble point and pore size determination

Membranes bubble points (i.e, the measure of the largest pores) (BPD), smallest pore size and mean flow pore diameter (MFD) were determined following ASTM F316-03 method, using a capillary flow porometer PoroluxTM 1000 (Porometer-Belgium).

For each test, membrane samples were initially fully wetted using Fluorinert C 43 (fluorinated fluid with a surface tension of 16 dyn/cm). Nitrogen (inert gas) was used.

### Thickness measurement

Thickness values were measured on dry membranes using a Mitutoyo digimatic indicator (model ID-H0530). At least five measurements were performed and the average values were calculated and are reported in the Table below.

**Table 5: Membranes characterization data**

| Membrane | BPD (μm) | MFD (μm) | Smallest pore (μm) | $\varepsilon_{(\%)}$ | PWP (L/(h $m^2$)) | Thickne ss (μm) |
|---|---|---|---|---|---|---|
| Ex. 3 | 0.056 | 0.031 | 0.027 | 60 | 15 | 374 |
| Ex. 4 | 0.507 | 0.071 | 0.028 | 60 | 63 | 281 |
| Ex. 5 | 1.75 | 0.204 | 0.093 | 63 | 413 | 163 |

### Tensile measurements

Tensile measurements were performed according to ASTM D638 type V of specimens taken from membrane of Ex. 5; values reported in the Table below comprise modulus (E), stress at break ($\sigma_B$) and strain at break ($\varepsilon_B$) are the result averaged from measurements on five specimens. Mechanical properties were determined both in machine direction and in transverse direction of the membrane.

**Table 6: Mechanical Properties of membrane of Ex. 5**

| E MD (MPa) | $E_{TD}$ (MPa) | $\varepsilon_B$ MD (%) | $\varepsilon_B$ TD (%) | $\sigma_B$ (MPa) | $\sigma_B$ (MPa) |
|---|---|---|---|---|---|
| 334 | 140 | 8 | 5 | 3 | 4.4 |

## Claims

**1.** A composition [composition (C)] comprising:

(a) at least one poly(arylene sulfide) (PAS) polymer,
(b) at least one polyelectrolyte [polyelectrolyte (E)], and
(c) at least one salt of an aromatic compound, said salt comprising an aromatic group and at least one sulfonate or carboxylate of a metal selected from the group consisting of alkaline metals, alkaline-earth metals, aluminum, iron, zinc, nickel, copper, palladium and silver [compound (S)],
wherein the polyelectrolyte (E) is a polymer having recurring units, said recurring units possessing an acid group selected from groups of formulae:

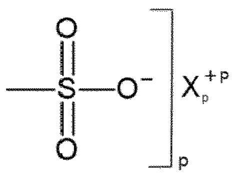

(E-s)

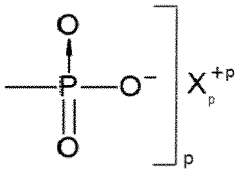

(E-p)

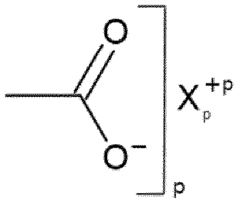

(E-c)

with $X_p$ being a p-valent cation, with p being 1, 2 or 3, preferably 1 or 2; $X_p$ being preferably H, an (alkyl)ammonium group or a metal cation group.

**2.** The composition of Claim 1, wherein polymer (PAS) comprises recurring units ($R_{PAS1}$) represented by the following formula:

$$[-Ar_1\text{-}S\text{-}] \qquad (R_{PAS1})$$

wherein

$-Ar_1-$ is selected from the group of formulae consisting of:

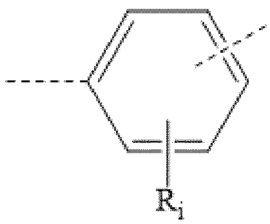

(a)

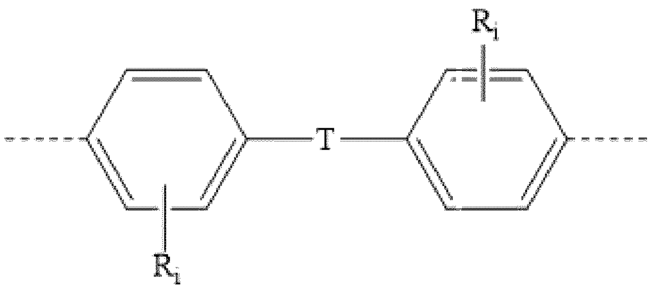

(b)

and

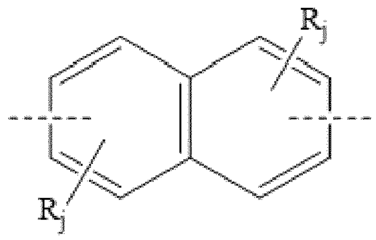

(c)

wherein:

R, at each instance, is independently selected from the group consisting of a $C_1$-$C_{12}$ alkyl group, a $C_7$-$C_{24}$ alkylaryl group, a $C_7$-$C_{24}$ aralkyl group, a $C_6$-$C_{24}$ arylene group, and a $C_6$-$C_{18}$ aryloxy group;
T is selected from the group consisting of a bond, -CO-, $-SO_2-$, -O-, - $C(CH_3)_2$-, $-C(CF_3)_2-$, phenyl and $-CH_2-$;
i, at each instance, is an independently selected integer from 0 to 4;
j, at each instance, is an independently selected integer from 0 to 3; and
wherein $-Ar_1-$ is preferably represented by any of the following formulae:

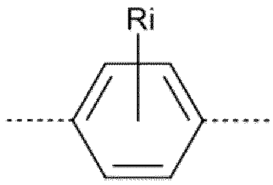

(a-1)

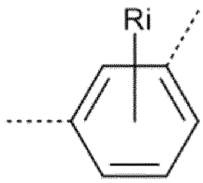

(a-2)

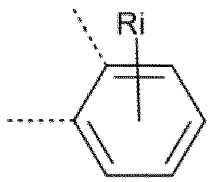

(a-3), with R and i having the meaning above.

**3.** The composition of Claim 2, wherein polymer (PAS) is a poly(phenylene sulfide) (PPS) polymer having units ($R_{PAS1}$) of formula:

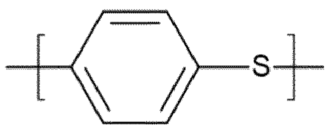

($R_{PPS}$), and which may additionally comprise units of any of formulae:

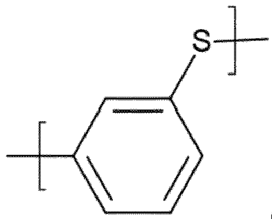

($R_{PPS\text{-}m}$)

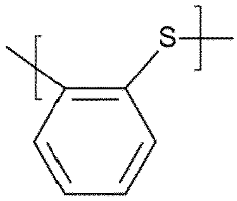

($R_{PPS\text{-}o}$),

being understood that when polymer (PPS) further comprises units ($R_{PPS\text{-}m}$) and/or ($R_{PPS\text{-}o}$), the total concentration of recurring units ($R_{PPS\text{-}m}$) and/or ($R_{PPS\text{-}o}$) in the polymer (PPS) is at most 10 mol%, at most 5 mol%, at most 3 mol%, at most 1 mol%, based on total amount of units ($R_{PPS}$), ($R_{PPS\text{-}m}$) and ($R_{PPS\text{-}o}$).

**4.** The composition (C) of Claim 3,

- wherein polymer (PAS) is a polymer (PPS) essentially consisting of units ($R_{PAS1}$) of formula ($R_{PPS}$):

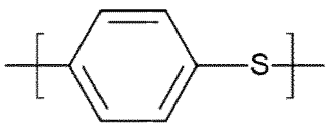

;

and/or
- wherein the polymer (PAS) has a melt flow rate (at 315.6°C under a weight of 1.27 kg according to ASTM D1238, procedure B) of at most 700 g/10 min, more preferably of at most 500 g/10 min, even more preferably of at most 200 g/10 min, still more preferably of at most 50 g/10 min, yet more preferably of at most 35 g/10 min and/or of at least 1 g/10 min, more preferably of at least 5 g/10 min, even more preferably of at least 10 g/10 min, still more preferably of at least 15 g/10 min; and/or
- wherein the polymer (PAS) has a melting point of at least 240°C, more preferably of at least 248°C, even more preferably of at least 250°C, and/or of at most 320°C, more preferably of at most 300°C, even more preferably of at most 295°C, when determined by differential scanning calorimeter (DSC) according to ASTM D3418.

**5.** The composition (C) according to anyone of the preceding claims,

- wherein the polyelectrolyte (E) has a weight loss of less than 5 wt.%, preferably of less than 3 wt.%, in the temperature range from 100 and 300°C, when determined by TGA analysis according to ASTM E1131, under inert atmosphere; and/or
- wherein the polyelectrolyte (E) has a solubility in water at 25°C of at least 1.0 g/l, preferably 5.0 g/l, more preferably 10.0 g/l, and/or possesses an average molecular weight of exceeding 500, preferably exceeding 600, more preferably exceeding 800.

**6.** The composition (C) according to anyone of the preceding claims, wherein polyelectrolyte (E) is selected from the group consisting of sulfonated aromatic-formaldehyde condensation products [polymers (Ar-S), hereunder], and preferably from polymers (Ar-S) comprising units of formula ($R_{APS}$):

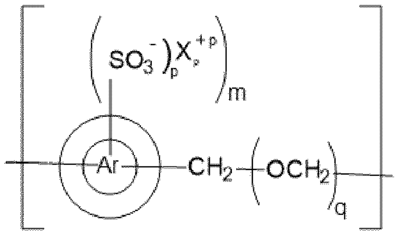

($R_{APS}$)

wherein:

- the symbol

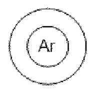

denotes an aromatic group, which may be mononuclear or polynuclear, may be condensed or not, such as a phenyl group, a biphenyl group, a naphthalene group, and the like;
- $X_p$ is a p-valent cation, with p being 1, 2 or 3, preferably 1 or 2; $X_p$ being preferably H, an (alkyl)ammonium group, a metal cation group;
- q is zero or an integer of 1 or more; and
- in each recurring unit of formula ($R_{APS}$), m is zero or an integer of 1 to 4, with the provision that the average value of m, which is also referred to as degree of sulfonation (D.S., hereunder) is generally comprised from about 0.4 to about 1.4.

**7.** The composition (C) of Claim 6, wherein polyelectrolyte (E) is a polymer (Ar-S), which is selected from polymers (N-S) which comprise recurring units ($R_{NPS}$) of formula ($R_{NPS}$-1):

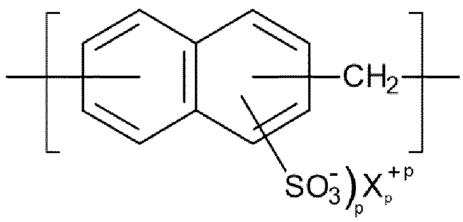

($R_{NPS}$-1)

wherein $X_p$ is a cation of valency p, with p being 1, 2 or 3,
and which may comprise recurring units of formulae ($R_{NPS}$-2) and ($R_{NPS}$-3)

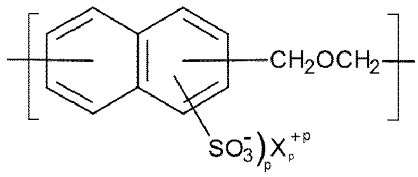

($R_{NPS}$-2)

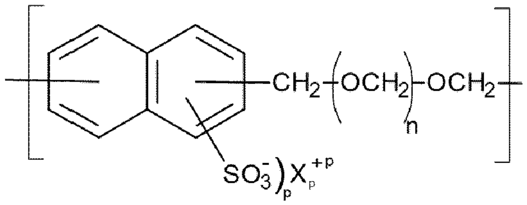

($R_{NPS}$-3)

with n being an integer, in particular n being 1 to 3, and $X_p$ and p having the meaning above,

wherein, preferably, the molar fraction of units ($R_{NPS}$-1) exceeds 50 % moles, preferably 70 % moles, more preferably 85 % moles of total units ($R_{NPS}$-1), ($R_{NPS}$-2) and ($R_{NPS}$-3).

**8.** The composition according to anyone of the preceding claims, wherein said compound (S) complies with the following formula (I) :

$$(R)_a\text{-Ar-}(T)_b \qquad (I)$$

wherein

Ar is an aromatic moiety selected from the group consisting of substituted or unsubstituted, aromatic monocyclic or polycyclic group having 5 to 18 carbon atoms,
a is zero or an integer ranging from 1 to 5, preferably a is zero or 1; when a is an integer from 1 to 5, each of R, identical or different from each other, is selected from the group consisting of a halogen atom, -OH, $-NH_2$, a $C_1$-$C_{18}$ aliphatic group, a $C_1$-$C_{18}$ cycloaliphatic group and a $C_1$-$C_{18}$ aromatic group;
b is an integer ranging from 1 to 4, preferably b is 1 or 2;
each of T, identical or different from each other, is $(SO_3^-)(M^{p+})_{1/p}$ or $(COO^-)(M^{p+})_{1/p}$ wherein $M^{p+}$ is a metal cation of p valence selected from the group consisting of alkaline metals, alkaline-earth metals, aluminium, iron, zinc, nickel, copper, palladium and silver; and
wherein preferably, said group -Ar- in formula (I) is selected from the group consisting of :

(Ar-A) 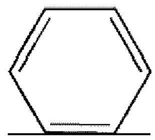

(Ar-B) 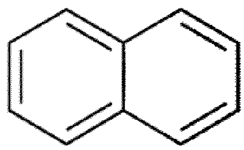

(Ar-C) 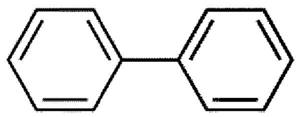

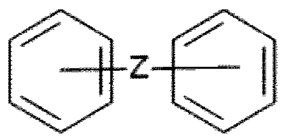
(Ar-D)

wherein
Z is a divalent moiety selected from the group consisting of $-SO_2-$, -CO- and (halo)alkylenes of 1 to 6 carbon atoms; and
wherein, more preferably, compound (S) complies with the following formula (II) :

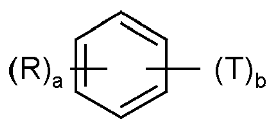
(II)

wherein :

a, R, b and T are as defined above.

**9.** The composition according to Claim 8, wherein compound (S) is selected in the group comprising, more preferably consisting of sodium or potassium benzoate, sodium or potassium methyl benzoate, sodium or potassium ethylbenzoate, sodium or potassium butylbenzoate, sodium or potassium benzene sulfonate, sodium or potassium benzene-1,3-disulfonate, sodium or potassium p-toluene sulfonate, sodium or potassium xylenesulfonate, sodium or potassium cumene sulfonate, sodium or potassium para-cymene sulfonate, sodium or potassium n-butyl benzene sulfonate, sodium or potassium iso-butyl benzene sulfonate, sodium or potassium tert-butyl benezene sulfonate and sodium or potassium dodecylbenzenesulfonate.

**10.** The composition according to anyone of the preceding Claims, wherein:

said composition (C) comprises said at least one polymer (PAS) in an amount from 25 wt.% to 65 wt.%, preferably of from 30 wt.% to 55 wt.%, more preferably of from 35 wt.% to 50 wt.% based on the total weight of said composition (C); and/or
said composition (C) comprises said at least one polyelectrolyte (E) in an amount from 5 wt.% to 50 wt.%, preferably of from 10 wt.% to 45 wt.%, more preferably of from 15 wt.% to 40 wt.%, based on the total weight of said composition (C); and/or
said composition (C) comprises said at least one compound (S) in an amount from 5 wt.% to 50 wt.%, preferably of from 10 wt.% to 45 wt.%, more preferably of from 15 wt.% to 40 wt.%, based on the total weight of said composition (C).

**11.** The composition according to Claim 10, wherein said composition (C) comprises:

- polymer (PPS), as described in Claims 3 or 4, in an amount from 25 wt.% to 65 wt.%, preferably of from 30 wt.% to 55 wt.%, more preferably of from 35 wt.% to 50 wt.%;
- polymer (Ar-S), as described in Claim 7, and preferably polymer (N-S), as described in Claim 8, in an amount from 5 wt.% to 50 wt.%, preferably of from 10 wt.% to 45 wt.%, more preferably of from 15 wt.% to 40 wt.%; and
- compound (S) of formula (I) : $(R)_a$-Ar-$(T)_b$, as described in Claim 9, in an amount from 5 wt.% to 50 wt.%, preferably of from 10 wt.% to 45 wt.%, more preferably of from 15 wt.% to 40 wt.%,

the amounts being based on the total weight of said composition (C).

**12.** A method ($M^C$ of making a composition (C) according to anyone of Claims 1 to 11, said method comprises blending at least one polymer (PAS), at least one polyelectrolyte (E) and at least one compound (S), wherein said blending is carried out in a melt-mixing apparatus, in particular in an apparatus selected from the group consisting of kneaders, Banbury mixers, single-screw extruders, and twin-screw extruders.

**13.** A method [method ($M^Q$ for the manufacture of a microporous article [article ($P_P$) ], said method comprising

(I) melt processing a composition (C) according to anyone of Claims 1 to 11, thus providing a precursor article [article ($A_P$)];
(II) contacting said article ($A_P$) as obtained in step (I) with at least one leaching medium, so as to at least partially remove polyelectrolyte (E) and compound (S), thus providing said article ($P_P$)..

**14.** The method ($M^Q$ of Claim 13 wherein:

- in step (I), composition (C) is melt processed using a melt processing technology selected from extrusion molding, injection molding, cast molding, melt spinning; and/or
- in Step (I), after melt processing of composition (C), article ($A_P$) is appropriately cooled below the melting temperature and/or glass transition temperature of the polymer (PAS); and/or
- Step (II) is performed by placing said article ($A_P$) in a bath comprising at least one leaching medium selected from the group consisting of aqueous media and organic solvent media, preferably the leaching medium is an aqueous medium, such as an aqueous basic medium.

**Patentansprüche**

1. Zusammensetzung [Zusammensetzung (C)], umfassend:

   (a) mindestens ein Poly(arylensulfid)(PAS)-Polymer,
   (b) mindestens einen Polyelektrolyt [Polyelektrolyt (E)] und
   (c) mindestens ein Salz einer aromatischen Verbindung, wobei das Salz eine aromatische Gruppe und mindestens ein Sulfonat oder Carboxylat eines Metalls aus der Gruppe bestehend aus Alkalimetallen, Erdalkalimetallen, Aluminium, Eisen, Zink, Nickel, Kupfer, Palladium und Silber umfasst [Verbindung (S)],
   wobei es sich bei dem Polyelektrolyt (E) um ein Polymer mit Wiederholungseinheiten handelt, wobei die Wiederholungseinheiten eine Säuregruppe aufweisen, die aus Gruppen der folgenden Formeln ausgewählt ist:

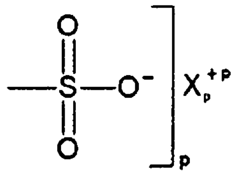

(E-s)

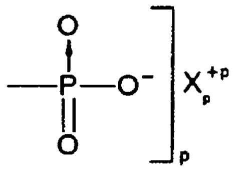

(E-p)

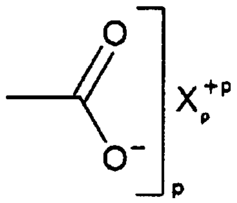

(E-c)

   wobei $X_p$ für ein p-wertiges Kation steht, wobei p für 1, 2 oder 3, vorzugsweise 1 oder 2, steht; wobei $X_p$ vorzugsweise für H, eine (Alkyl)ammoniumgruppe oder eine Metallkationgruppe steht.

2. Zusammensetzung nach Anspruch 1, wobei Polymer (PAS) Wiederholungseinheiten ($R_{PAS1}$) umfasst, die durch die folgende Formel wiedergegeben werden:

   $[-Ar_1-S-]$ ($R_{PAS1}$)

   wobei

   $-Ar_1-$ ausgewählt ist aus der Gruppe von Formeln bestehend aus:

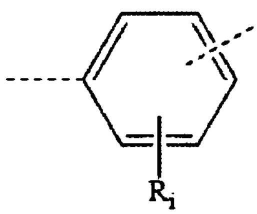

(a)

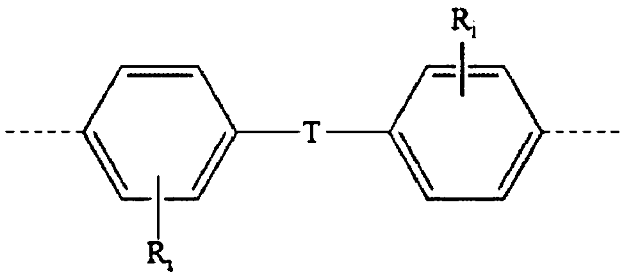

(b)

und

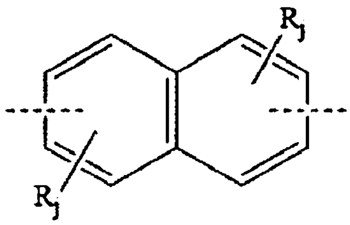

(c)

wobei:

R jeweils unabhängig aus der Gruppe bestehend aus einer $C_1$-$C_{12}$-Alkylgruppe, einer $C_7$-$C_{24}$-Alkylarylgruppe, einer $C_7$-$C_{24}$-Aralkylgruppe, einer $C_6$-$C_{24}$-Arylengruppe und einer $C_6$-$C_{18}$-Aryloxygruppe ausgewählt ist;
T aus der Gruppe bestehend aus einer Bindung, -CO-, $-SO_2-$, -O-, $-C(CH_3)_2-$, $-C(CF_3)_2-$, Phenyl und $-CH_2-$ ausgewählt ist;
i bei jedem Auftreten für eine unabhängig ausgewählte ganze Zahl von 0 bis 4 steht;
j bei jedem Auftreten für eine unabhängig ausgewählte ganze Zahl von 0 bis 3 steht; und wobei $-Ar_1-$ vorzugsweise durch eine der folgenden Formeln wiedergegeben wird:

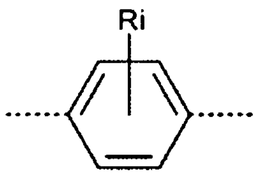

(a-1)

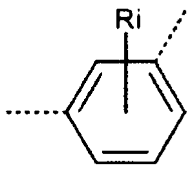

(a-2)

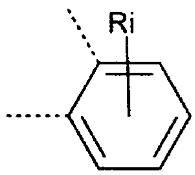

(a-3), wobei R und i die obige Bedeutung haben.

**3.** Zusammensetzung nach Anspruch 2, wobei es sich bei dem Polymer (PAS) um ein Poly(phenylensulfid)(PPS)-Polymer mit Einheiten ($R_{PAS1}$) der folgenden Formel handelt:

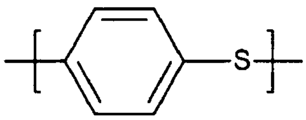

($R_{PPS}$), das zusätzlich Einheiten einer der folgenden Formeln umfassen kann:

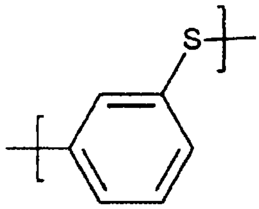

($R_{PPS-m}$)

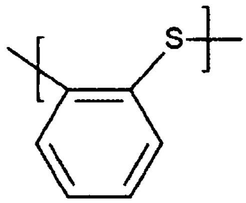

($R_{PPS-o}$),

wobei es sich versteht, dass dann, wenn Polymer (PPS) ferner Einheiten ($R_{PPS-m}$) und/oder ($R_{PPS-o}$) umfasst, die Gesamtkonzentration von Wiederholungseinheiten ($R_{PPS-m}$) und/oder ($R_{PPS-o}$) in dem Polymer (PPS) höchstens 10 Mol-%, höchstens 5 Mol-%, höchstens 3 Mol-%, höchstens 1 Mol-%, bezogen auf die Gesamtmenge an Einheiten ($R_{PPS}$), ($R_{PPS-m}$) und ($R_{PPS-o}$), beträgt.

**4.** Zusammensetzung (C) nach Anspruch 3,

- wobei es sich bei Polymer (PAS) um ein Polymer (PPS) handelt, das im Wesentlichen aus Einheiten ($R_{PAS1}$) der Formel ($R_{PPS}$):

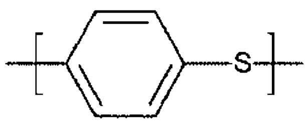

besteht; und/oder
- wobei das Polymer (PAS) eine Schmelzflussrate (bei 315,6 °C unter einem Gewicht von 1,27 kg gemäß ASTM D1238, Verfahrensweise B) von höchstens 700 g/10 min, weiter bevorzugt von höchstens 500 g/10 min, noch weiter bevorzugt von höchstens 200 g/10 min, noch weiter bevorzugt von höchstens 50 g/10 min, noch weiter bevorzugt von höchstens 35 g/10 min, und/oder von mindestens 1 g/10 min aufweist, weiter bevorzugt von mindestens 5 g/10 min, noch weiter bevorzugt von mindestens 10 g/10 min, noch weiter bevorzugt von mindestens 15 g/10 min, aufweist; und/oder
- wobei das Polymer (PAS) einen Schmelzpunkt von mindestens 240 °C, weiter bevorzugt von mindestens 248 °C, noch weiter bevorzugt von mindestens 250 °C, und/oder von höchstens 320 °C, weiter bevorzugt von höchstens 300 °C, noch weiter bevorzugt von höchstens 295 °C, aufweist, wenn mittels Differentialkalorimeter (DSC) gemäß ASTM D3418 bestimmt.

**5.** Zusammensetzung (C) nach einem der vorhergehenden Ansprüche,

- wobei der Polyelektrolyt (E) einen Gewichtsverlust von weniger als 5 Gew.-%, vorzugsweise von weniger als 3 Gew.-%, im Temperaturbereich von 100 und 300 °C, wenn durch TGA-Analyse gemäß ASTM E1131 bestimmt, unter Inertatmosphäre, aufweist; und/oder
- wobei der Polyelektrolyt (E) eine Löslichkeit in Wasser bei 25 °C von mindestens 1,0 g/l, vorzugsweise 5,0 g/l, weiter bevorzugt 10,0 g/l, aufweist und/oder ein mittleres Molekulargewicht von mehr als 500, vorzugsweise

mehr als 600, weiter bevorzugt mehr als 800, aufweist.

6. Zusammensetzung (C) nach einem der vorhergehenden Ansprüche, wobei der Polyelektrolyt (E) ausgewählt ist aus der Gruppe bestehend aus Kondensationsprodukten von sulfonierten Aromaten und Formaldehyd [nachstehend Polymeren (Ar-S)] und vorzugsweise aus Polymeren (Ar-S), die Einheiten der Formel ($R_{APS}$) umfassen:

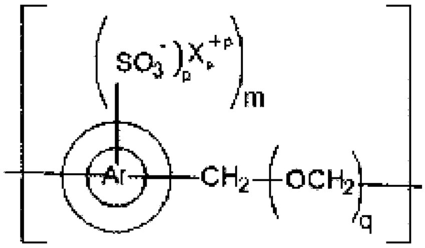

($R_{APS}$)

wobei:

- das Symbol

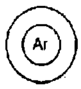

eine aromatische Gruppe bedeutet, die einkernig oder mehrkernig sein kann und gegebenenfalls kondensiert sein kann, wie eine Phenylgruppe, eine Biphenylgruppe, eine Naphthalingruppe und dergleichen;
- $X_p$ für ein p-wertiges Kation steht, wobei p für 1, 2 oder 3, vorzugsweise 1 oder 2, steht; wobei $X_p$ vorzugsweise für H, eine (Alkyl)ammoniumgruppe, eine Metallkationgruppe steht;
- q für null oder eine ganze Zahl mit einem Wert von 1 oder mehr steht; und
- in jeder Wiederholungseinheit der Formel ($R_{APS}$) m für null oder eine ganze Zahl von 1 bis 4 steht, mit der Maßgabe, dass der Durchschnittswert von m, der auch als Sulfonierungsgrad (nachstehend D.S.) bezeichnet wird, im Allgemeinen etwa 0,4 bis etwa 1,4 beträgt.

7. Zusammensetzung (C) nach Anspruch 6, wobei es sich bei dem Polyelektrolyt (E) um ein Polymer (Ar-S) handelt, das ausgewählt ist aus Polymeren (N-S), die Wiederholungseinheiten ($R_{NPS}$) der Formel ($R_{NPS}$-1) umfassen:

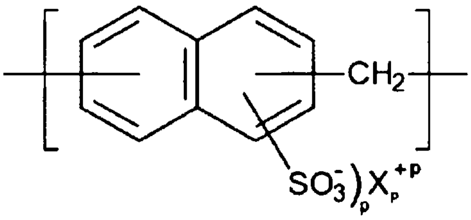

($R_{NPS}$-1)

wobei $X_p$ für ein Kation der Wertigkeit p steht, wobei p für 1, 2 oder 3 steht,
und die Wiederholungseinheiten der Formeln ($R_{NPS}$-2) und ($R_{NPS}$-3) umfassen können:

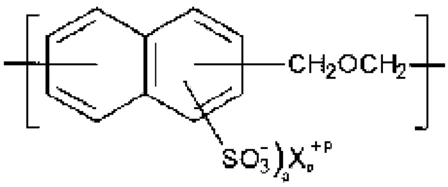

($R_{NPS}$-2)

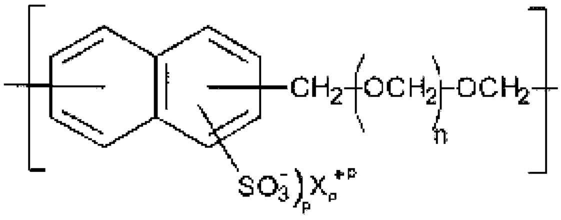

($R_{NPS}$-3)

wobei n für eine ganze Zahl steht, insbesondere wobei n für 1 bis 3 steht, und wobei $X_p$ und p die obige Bedeutung haben,
wobei vorzugsweise der molare Anteil der Einheiten ($R_{NPS}$-1) über 50 Mol-%, vorzugsweise 70 Mol-%, weiter bevorzugt 85 Mol-%, der gesamten Einheiten ($R_{NPS}$-1), ($R_{NPS}$-2) und ($R_{NPS}$-3) liegt.

**8.** Zusammensetzung nach einem der vorhergehenden Ansprüche, wobei die Verbindung (S) der folgenden Formel (I) entspricht:

$$(R)_a\text{-Ar-}(T)_b \qquad (I)$$

wobei

Ar für eine aromatische Gruppierung steht, die aus der Gruppe bestehend aus einer substituierten oder unsubstituierten aromatischen monocyclischen oder polycyclischen Gruppe mit 5 bis 18 Kohlenstoffatomen ausgewählt ist,
a für null oder eine ganze Zahl im Bereich von 1 bis 5 steht, vorzugsweise a für null oder 1 steht;
dann, wenn a für eine ganze Zahl von 1 bis 5 steht, R jeweils gleich oder voneinander verschieden aus der Gruppe bestehend aus einem Halogenatom, -OH, $-NH_2$, einer aliphatischen $C_1$-$C_{18}$-Gruppe, einer cycloaliphatischen $C_1$-$C_{18}$-Gruppe und einer aromatischen $C_1$-$C_{18}$-Gruppe ausgewählt ist;
b für eine ganze Zahl im Bereich von 1 bis 4 steht, vorzugsweise b für 1 oder 2 steht;
T jeweils gleich oder voneinander verschieden für $(SO_3^-)\,(M^{p+})_{1/p}$ oder $(COO^-)\,(M^{p+})_{1/p}$, steht, wobei $M^{p+}$ für ein Metallkation der Wertigkeit p steht, das aus der Gruppe bestehend aus Alkalimetallen, Erdalkalimetallen, Aluminium, Eisen, Zink, Nickel, Kupfer, Palladium und Silber ausgewählt ist; und
wobei vorzugsweise die Gruppe -Ar- in Formel (I) ausgewählt ist aus der Gruppe bestehend aus:

(Ar-A) 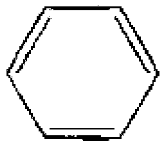

(Ar-B) 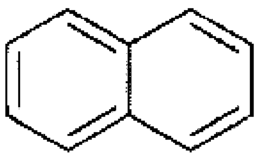

(Ar-C) 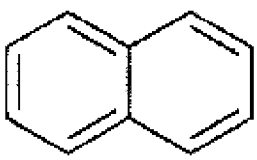

(Ar-D) 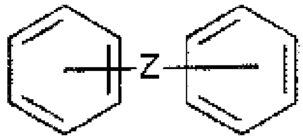

wobei Z für eine zweiwertige Einheit steht, die aus der Gruppe bestehend aus $-SO_2-$, -CO- und (Halogen) alkylenen mit 1 bis 6 Kohlenstoffatomen ausgewählt ist; und
wobei weiter bevorzugt Verbindung (S) der folgenden Formel (II) entspricht:

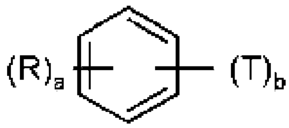 (II)

wobei:
a, R, b und T wie oben definiert sind.

**9.** Zusammensetzung nach Anspruch 8, wobei die Verbindung (S) aus der Gruppe ausgewählt ist, die Natrium- oder Kaliumbenzoat, Natrium- oder Kaliummethylbenzoat, Natrium- oder Kaliumethylbenzoat, Natrium- oder Kaliumbutylbenzoat, Natrium- oder Kaliumbenzolsulfonat, Natrium- oder Kaliumbenzol-1,3-disulfonat, Natrium- oder Kalium-p-toluolsulfonat, Natrium- oder Kaliumxylolsulfonat, Natrium- oder Kaliumcumolsulfonat, Natrium- oder Kaliumparacymolsulfonat, Natrium- oder Kalium-n-butylbenzolsulfonat, Natrium- oder Kaliumisobutylbenzolsulfonat, Natrium- oder Kalium-tert-butylbenzolsulfonat und Natrium- oder Kaliumdodecylbenzolsulfonat umfasst und weiter bevorzugt daraus besteht.

**10.** Zusammensetzung nach einem der vorhergehenden Ansprüche, wobei:

die Zusammensetzung (C) das mindestens eine Polymer (PAS) in einer Menge von 25 Gew.-% bis 65 Gew.-%, vorzugsweise von 30 Gew.-% bis 55 Gew.-%, weiter bevorzugt von 35 Gew.-% bis 50 Gew.-%, bezogen auf das Gesamtgewicht der Zusammensetzung (C), umfasst; und/oder
die Zusammensetzung (C) den mindestens einen Polyelektrolyt (E) in einer Menge von 5 Gew.-% bis 50 Gew.-%, vorzugsweise von 10 Gew.-% bis 45 Gew.-%, weiter bevorzugt von 15 Gew.-% bis 40 Gew.-%, bezogen auf das Gesamtgewicht der Zusammensetzung (C), umfasst; und/oder die Zusammensetzung (C) die mindestens eine Verbindung (S) in einer Menge von 5 Gew.-% bis 50 Gew.-%, vorzugsweise von 10 Gew.-% bis 45 Gew.-%, weiter bevorzugt von 15 Gew.-% bis 40 Gew.-%, bezogen auf das Gesamtgewicht der Zusammensetzung (C), umfasst.

**11.** Zusammensetzung nach Anspruch 10, wobei die Zusammensetzung (C) Folgendes umfasst:

- Polymer (PPS), wie in den Ansprüchen 3 oder 4 beschrieben, in einer Menge von 25 Gew.-% bis 65 Gew.-%, vorzugsweise von 30 Gew.-% bis 55 Gew.-%, weiter bevorzugt von 35 Gew.-% bis 50 Gew.-%;
- Polymer (Ar-S), wie in Anspruch 7 beschrieben, und vorzugsweise Polymer (N-S), wie in Anspruch 8 beschrieben, in einer Menge von 5 Gew.-% bis 50 Gew.-%, vorzugsweise von 10 Gew.-% bis 45 Gew.-%, weiter bevorzugt von 15 Gew.-% bis 40 Gew.-%; und
- Verbindung (S) der Formel (I) : $(R)_a$-Ar-$(T)_b$, wie in Anspruch 9 beschrieben, in einer Menge von 5 Gew.-% bis 50 Gew.-%, vorzugsweise von 10 Gew.-% bis 45 Gew.-%, weiter bevorzugt von 15 Gew.-% bis 40 Gew.-%,

wobei sich die Mengen auf das Gesamtgewicht der Zusammensetzung (C) beziehen.

**12.** Verfahren ($M^C$) zur Herstellung einer Zusammensetzung (C) nach einem der Ansprüche 1 bis 11, wobei das Verfahren das Mischen von mindestens einem Polymer (PAS), mindestens einem Polyelektrolyt (E) und mindestens einer Verbindung (S) umfasst, wobei das Mischen in einer Schmelzemischapparatur, insbesondere in einer Apparatur, die aus der Gruppe bestehend aus Knetern, Banbury-Mischern, Einschneckenextrudern und Doppelschneckenextrudern ausgewählt ist, durchgeführt wird.

**13.** Verfahren [Verfahren ($M^Q$)] zur Herstellung eines mikroporösen Gegenstands [Gegenstand ($P_P$)], wobei das Verfahren Folgendes umfasst:

(I) Schmelzeverarbeitung einer Zusammensetzung (C) nach einem der Ansprüche 1 bis 11, wodurch ein Vorläufergegenstand [Gegenstand ($A_P$)] bereitgestellt wird;
(II) Inkontaktbringen des in Schritt (I) erhaltenen Gegenstands ($A_P$) mit mindestens einem Auslaugungsmedium, um Polyelektrolyt (E) und Verbindung (S) zumindest teilweise zu entfernen, wodurch der Gegenstand ($P_P$) bereitgestellt wird.

**14.** Verfahren ($M^Q$) nach Anspruch 13, wobei:

- in Schritt (I) die Zusammensetzung (C) unter Verwendung einer Schmelzeverarbeitungstechnik, die aus Extrusionsformen, Spritzgießen, Gießformen, Schmelzespinnen ausgewählt ist, schmelzeverarbeitet wird; und/oder
- in Schritt (I) nach der Schmelzeverarbeitung der Zusammensetzung (C) der Gegenstand ($A_P$) geeignet unter die Schmelztemperatur und/oder Glasübergangstemperatur des Polymers (PAS) abgekühlt wird; und/oder
- Schritt (II) durchgeführt wird, indem der Gegenstand ($A_P$) in ein Bad eingebracht wird, das mindestens ein Auslaugungsmedium umfasst, das aus der Gruppe bestehend aus wässrigen Medien und organischen Lösungsmittelmedien ausgewählt ist, wobei es sich bei dem Auslaugungsmedium vorzugsweise um ein wässriges Medium, wie ein wässriges basisches Medium, handelt.

## Revendications

**1.** Composition [composition (C)] comprenant :

(a) au moins un polymère de poly(sulfure d'arylène) (PAS),
(b) au moins un polyélectrolyte [polyélectrolyte (E)], et
(c) au moins un sel d'un composé aromatique, ledit sel comprenant un groupe aromatique et au moins un sulfonate ou carboxylate d'un métal choisi dans le groupe constitué par les métaux alcalins, les métaux alcalino-terreux, l'aluminium, le fer, le zinc, le nickel, le cuivre, le palladium et l'argent [composé (S)],
le polyélectrolyte (E) étant un polymère possédant des motifs répétitifs, lesdits motifs répétitifs possédant un groupe de type acide choisi parmi les groupes de formules :

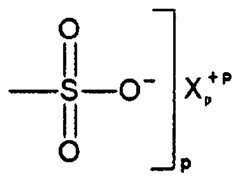
(E-s)

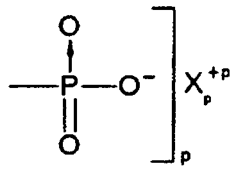
(E-p)

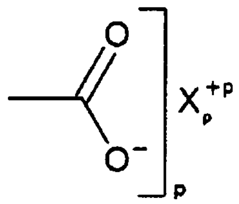
(E-c)

$X_p$ étant un cation p-valent, p étant 1, 2 ou 3, de préférence 1 ou 2 ; $X_p$ étant de préférence H, un groupe (alkyl) ammonium ou un groupe cation métallique.

**2.** Composition selon la revendication 1, le polymère (PAS) comprenant des motifs répétitifs ($R_{PAS1}$) représentés par la

formule suivante :

[-$Ar_1$-S-] ($R_{PAS1}$)

-$Ar_1$- étant choisi dans le groupe de formules constitué par :

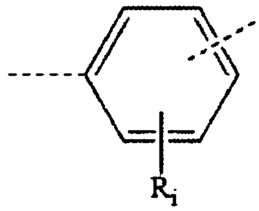

(a)

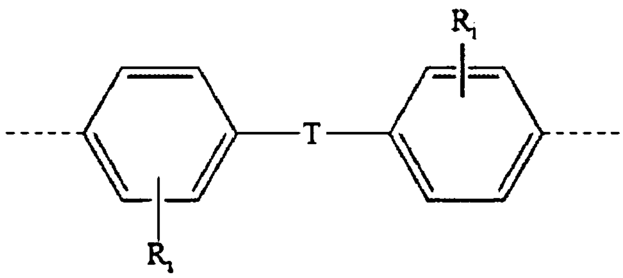

(b)

et

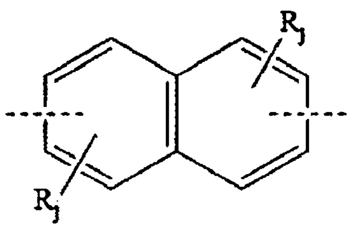

(c)

R, à chaque occurrence, étant indépendamment choisi dans le groupe constitué par un groupe alkyle en $C_1$-$C_{12}$, un groupe alkylaryle en $C_7$-$C_{24}$, un groupe aralkyle en $C_7$-$C_{24}$, un groupe arylène en $C_6$-$C_{24}$, et un groupe aryloxy en $C_6$-$C_{18}$ ;
T étant choisi dans le groupe constitué par une liaison, -CO-, -$SO_2$-, -O-, -$C(CH_3)_2$-, -$C(CF_3)_2$-, phényle et -$CH_2$- ; i, à chaque occurrence, étant un entier indépendamment choisi parmi 0 à 4 ;
j, à chaque occurrence, étant un entier indépendamment choisi parmi 0 à 3 ; et -$Ar_1$- étant de préférence représenté par l'une quelconque des formules suivantes :

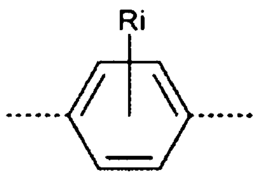

(a-1)

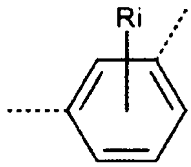

(a-2)

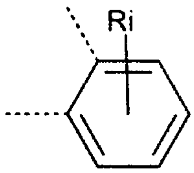

(a-3), R et i ayant la signification ci-dessus.

**3.** Composition de la revendication 2, le polymère (PAS) étant un polymère de poly(sulfure de phénylène) (PPS) ayant des motifs ($R_{PAS1}$) de formule :

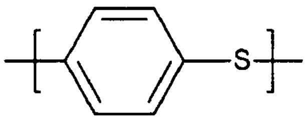

($R_{PPS}$) et qui peuvent en outre comprendre des motifs de l'une quelconque des formules :

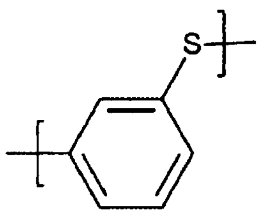

($R_{PPS\text{-}m}$)

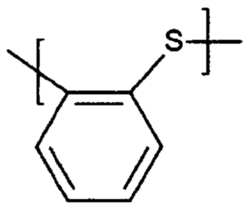

($R_{PPS\text{-}o}$) ,

étant entendu que lorsque le polymère (PPS) comprend en outre des motifs ($R_{PPS\text{-}m}$) et/ou ($R_{PPS\text{-}o}$), la concentration totale en motifs répétitifs ($R_{PPS\text{-}m}$) et/ou ($R_{PPS\text{-}o}$) dans le polymère (PPS) est d'au plus 10 % en moles, d'au plus 5 % en moles, d'au plus 3 % en moles, d'au plus 1 % en moles, par rapport à la quantité totale de motifs ($R_{PPS}$), ($R_{PPS\text{-}m}$) et ($R_{PPS\text{-}o}$).

**4.** Composition (C) selon la revendication 3,

- le polymère (PAS) étant un polymère (PPS) essentiellement constitué par des motifs ($R_{PAS1}$) de formule ($R_{PPS}$) :

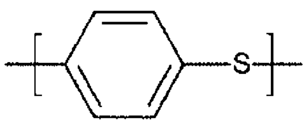

; et/ou

- le polymère (PAS) ayant un indice de fluidité (à 315,6 °C sous un poids de 1,27 kg selon la norme ASTM D1238, procédure B) d'au plus 700 g/10 min, plus préférablement d'au plus 500 g/10 min, encore plus préférablement d'au plus 200 g/10 min, toujours plus préférablement d'au plus 50 g/10 min, encore plus préférablement d'au plus 35 g/10 min et/ou d'au moins 1 g/10 min, plus préférablement d'au moins 5 g/10 min, encore plus préférablement d'au moins 10 g/10 min, toujours plus préférablement d'au moins 15 g/10 min ; et/ou
- le polymère (PAS) ayant un point de fusion d'au moins 240 °C, plus préférablement d'au moins 248 °C, encore plus préférablement d'au moins 250 °C et/ou d'au plus 320 °C, plus préférablement d'au plus 300 °C, encore plus préférablement d'au plus 295 °C, lorsqu'il est déterminé par un calorimètre différentiel à balayage (DSC) selon la norme ASTM D3418.

**5.** Composition (C) selon l'une quelconque des revendications précédentes,

- le polyélectrolyte (E) ayant une perte de poids inférieure à 5 % en poids, de préférence inférieure à 3 % en poids, dans la plage de température de 100 à 300 °C, lorsqu'elle est déterminée par analyse TGA selon la norme ASTM E1131, sous atmosphère inerte ; et/ou
- le polyélectrolyte (E) a une solubilité dans l'eau à 25 °C d'au moins 1,0 g/l, de préférence 5,0 g/l, plus préférablement 10,0 g/l, et/ou possède un poids moléculaire moyen dépassant 500, de préférence dépassant 600, plus préférablement dépassant 800.

**6.** Composition (C) selon l'une quelconque des revendications précédentes, le polyélectrolyte (E) étant choisi dans le groupe constitué par des produits de condensation formaldéhydes-aromatiques sulfonés [polymères (Ar-S), ci-après] et de préférence parmi les polymères (Ar-S) comprenant des motifs de formule ($R_{APS}$) :

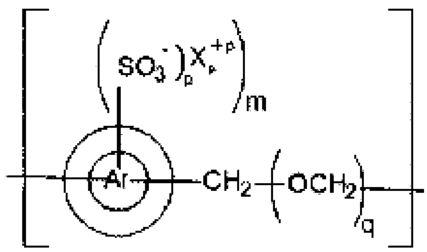

($R_{APS}$)

- le symbole

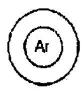

désignant un groupe aromatique, qui peut être mononucléaire ou polynucléaire, peut être condensé ou non, tel qu'un groupe phényle, un groupe biphényle, un groupe naphtalène, et similaire ;
- $X_p$ étant un cation p-valent, p étant 1, 2 ou 3, de préférence 1 ou 2 ; $X_p$ étant de préférence H, un groupe (alkyl) ammonium, un groupe cation métallique ;
- q étant zéro ou un entier parmi 1 ou plus ; et
- dans chaque motif répétitif de formule ($R_{APS}$), m étant zéro ou un entier de 1 à 4, à la condition que la valeur moyenne de m, qui est également appelée degré de sulfonation (D.S., ci-après) soit généralement comprise d'environ 0,4 à environ 1,4.

**7.** Composition (C) selon la revendication 6, le polyélectrolyte (E) étant un polymère (Ar-S), qui est choisi parmi les polymères (N-S) qui comprennent des motifs répétitifs ($R_{NPS}$) de formule ($R_{NPS}$-1) :

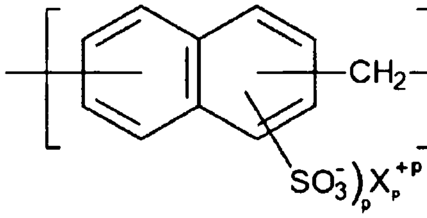

($R_{NPS}$-1)

$X_p$ étant un cation de valence p, p étant 1, 2 ou 3,
et qui peut comprendre des motifs répétitifs des formules ($R_{NPS}$-2) et ($R_{NPS}$-3)

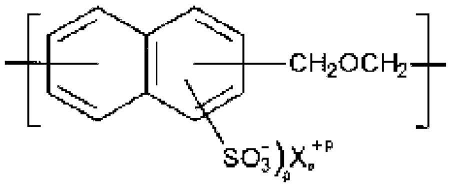

($R_{NPS}$-2)

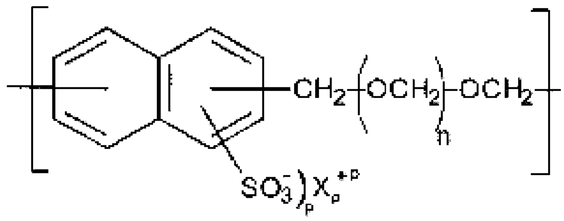

($R_{NPS}$-3)

n étant un entier, en particulier n étant 1 à 3, et $X_p$ et p ayant la signification ci-dessus,
de préférence, la fraction molaire de motifs ($R_{NPS}$-1) dépassant 50 % moles, préférablement 70 % moles, plus préférablement 85 % moles des motifs totaux ($R_{NPS}$-1), ($R_{NPS}$-2) et ($R_{NPS}$-3).

**8.** Composition selon l'une quelconque des revendications précédentes, ledit composé (S) répondant à la formule (I) suivante :

$(R)_a$-Ar-$(T)_b$ (I)

Ar étant un groupement aromatique choisi dans le groupe constitué par un groupe monocyclique ou polycyclique aromatique, substitué ou non substitué, possédant 5 à 18 atomes de carbone,
a étant zéro ou un entier allant de 1 à 5, préférablement a étant zéro ou 1 ;
lorsque a est un entier de 1 à 5, chacun parmi R,
identiques ou différents les uns des autres, est choisi dans le groupe constitué par un atome d'halogène, -OH, -$NH_2$, un groupe aliphatique en $C_1$-$C_{18}$, un groupe cycloaliphatique en $C_1$-$C_{18}$ et un groupe aromatique en $C_1$-$C_{18}$ ;
b étant un entier allant de 1 à 4, de préférence b étant 1 ou 2 ;
chacun parmi T, identiques ou différents les uns des autres, étant $(SO_3^-)(M^{p+})_{1/p}$ ou $(COO^-)(M^{p+})_{1/p}$, $M^{p+}$ étant un cation métallique de valence p choisi dans le groupe constitué par les métaux alcalins, les métaux alcalino-terreux, l'aluminium, le fer, le zinc, le nickel, le cuivre, le palladium et l'argent ; et
de préférence, ledit groupe -Ar- dans la formule (I) étant sélectionné dans le groupe constitué par :

(Ar-A) 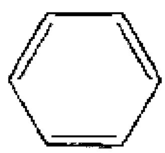

(Ar-B) 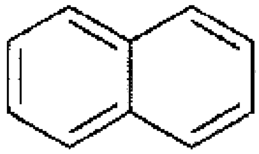

(Ar-C) 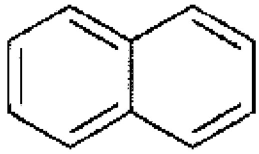

(Ar-D) 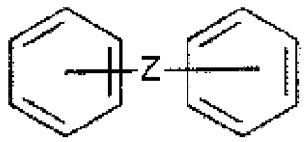

Z étant un groupe divalent choisi dans le groupe constitué par $-SO_2-$, -CO- et (halogéno)alkylènes de 1 à 6 atomes de carbone ; et
plus préférablement, le composé (S) répondant à la formule suivante (II) :

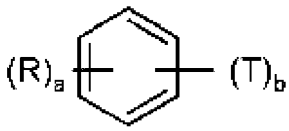
(II)

a, R, b et T étant tels que définis ci-dessus.

**9.** Composition selon la revendication 8, le composé (S) étant choisi dans le groupe comprenant, plus préférablement constitué par le benzoate de sodium ou de potassium, le méthylbenzoate de sodium ou de potassium, l'éthylbenzoate de sodium ou de potassium, le butylbenzoate de sodium ou de potassium, le benzènesulfonate de sodium ou de potassium, le benzène-1,3-disulfonate de sodium ou de potassium, le p-toluènesulfonate de sodium ou de potassium, le xylènesulfonate de sodium ou de potassium, le cumènesulfonate de sodium ou de potassium, le para-cymènesulfonate de sodium ou de potassium, le n-butylbenzènesulfonate de sodium ou de potassium, l'isobutylbenzènesulfonate de sodium ou de potassium, le tert-butylbenzènesulfonate de sodium ou de potassium et le dodécylbenzènesulfonate de sodium ou de potassium.

**10.** Composition selon l'une quelconque des revendications précédentes :

ladite composition (C) comprenant ledit au moins un polymère (PAS) en une quantité allant de 25 % en poids à 65 % en poids, préférablement de 30 % en poids à 55 % en poids, plus préférablement de 35 % en poids à 50 % en poids, sur la base du poids total de ladite composition (C) ; et/ou
ladite composition (C) comprenant ledit au moins un polyélectrolyte (E) en une quantité allant de 5 % en poids à 50 % en poids, de préférence de 10 % en poids à 45 % en poids, plus préférablement de 15 % en poids à 40 % en poids, sur la base du poids total de ladite composition (C) ; et/ou
ladite composition (C) comprenant ledit au moins un composé (S) en une quantité allant de 5 % en poids à 50 % en poids, préférablement de 10 % en poids à 45 % en poids,
plus préférablement de 15 % en poids à 40 % en poids, sur la base du poids total de ladite composition (C).

**11.** Composition selon la revendication 10, ladite composition (C) comprenant :

- un polymère (PPS), tel que décrit dans les revendications 3 ou 4, en une quantité de 25 % à 65 % en poids, de préférence de 30 % à 55 % en poids, plus préférablement de 35 % à 50 % en poids ;
- un polymère (Ar-S), tel que décrit dans la revendication 7, et de préférence du polymère (N-S), tel que décrit dans la revendication 8, en une quantité de 5 % en poids à 50 % en poids, de préférence de 10 % en poids à 45 % en

poids, plus préférablement de 15 % en poids à 40 % en poids ; et
- un composé (S) de formule (I) : $(R)_a$-Ar-$(T)_b$, tel que décrit à la revendication 9, en une quantité de 5 % en poids à 50 % en poids, de préférence de 10 % en poids à 45 % en poids, plus préférablement de 15 % en poids à 40 % en poids,

les quantités étant basées sur le poids total de ladite composition (C).

**12.** Procédé ($M^C$) de préparation d'une composition (C) selon l'une quelconque des revendications 1 à 11, ledit procédé comprenant le mélange d'au moins un polymère (PAS), d'au moins un polyélectrolyte (E) et d'au moins un composé (S), ledit mélange étant effectué dans un appareil de mélange à l'état fondu, en particulier dans un appareil choisi dans le groupe constitué par des malaxeurs, des mélangeurs Banbury, des extrudeuses à une vis et des extrudeuses à deux vis.

**13.** Procédé [procédé ($M^Q$)] pour la préparation d'un article microporeux [article ($P_P$)], ledit procédé comprenant

(I) un traitement en fusion d'une composition (C) selon l'une quelconque des revendications 1 à 11, fournissant ainsi un article précurseur [article ($A_P$)] ;
(II) la mise en contact dudit article ($A_P$) tel qu'obtenu à l'étape (I) avec au moins un milieu de lixiviation, afin d'éliminer au moins partiellement un polyélectrolyte (E) et un composé (S), fournissant ainsi ledit article ($P_P$).

**14.** Procédé ($M^Q$) selon la revendication 13 :

- dans l'étape (I), la composition (C) étant traitée à l'état fondu à l'aide d'une technologie de traitement à l'état fondu choisie parmi un moulage par extrusion, un moulage par injection, un moulage par coulée, un filage par fondue ; et/ou
- dans l'étape (I), après traitement à l'état fondu de la composition (C), l'article ($A_P$) étant refroidi de manière appropriée en dessous de la température de fusion et/ou de la température de transition vitreuse du polymère (PAS) ; et/ou
- l'étape (II) étant réalisée en plaçant ledit article ($A_P$) dans un bain comprenant au moins un milieu de lixiviation choisi dans le groupe constitué par les milieux aqueux et les milieux de solvant organique, de préférence le milieu de lixiviation étant un milieu aqueux, tel qu'un milieu basique aqueux.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5246647 A
- US 5507984 A
- WO 9417974 A
- WO 9417985 A
- WO 2018065526 A


### Non-patent literature cited in the description


- **X. WANG et al.** *RSC Adv.*, 2017, vol. 7, 10503
- **SMOLDERS K. et al.** Terminology for membrane distillation. *Desalination*, 1989, vol. 72, 249-262
- *Appendix of Desalination*, 1989, vol. 72, 249-262